# EUROPÄISCHE PATENTSCHRIFT

(11) **EP 4 452 788 B1**
(45) Veröffentlichungstag und Bekanntmachung des Hinweises auf die Patenterteilung: **08.10.2025**
(21) Anmeldenummer: 22834989.0
(22) Anmeldetag: 12.12.2022
(51) Int. Cl.: B65G 43/00, G05B 19/418, G06N 3/08, B65G 43/10

(54) **VERFAHREN ZUM BETREIBEN EINER FÖRDERANORDNUNG**
METHOD FOR OPERATING A CONVEYOR
PROCÉDÉ DE FONCTIONNEMENT D'UN AGENCEMENT DE TRANSPORT

(30) Priorität: 23.12.2021 EP 21217526; 18.02.2022 EP 22157555
(43) Veröffentlichungstag der Anmeldung: 30.10.2024
(73) Patentinhaber: Interroll Holding AG, 6592 Sant' Antonino (CH)
(72) Erfinder: RIPPERDA, Christian, 41836 Hückelhoven (DE)
(74) Vertreter: Kohlhof, Stephan
(86) Internationale Anmeldenummer: PCT/EP2022/085318
(87) Internationale Veröffentlichungsnummer: WO 2023/117521

(56) Entgegenhaltungen:
- US-A1- 2018 284 741
- NIGGEMANN OLIVER ET AL: "Data-Driven Monitoring of Cyber-Physical Systems Leveraging on Big Data and the Internet-of-Things for Diagnosis and Control", INTERNET, August 2015 (2015-08-01), XP055943605, Retrieved from the Internet <URL:http://ceur-ws.org/Vol-1507/dx15paper24.pdf> [retrieved on 20220718]

## Beschreibung

Die Erfindung betrifft ein Verfahren zum Betreiben einer Förderanordnung.

EP 1 361 182 B1 offenbart eine Fördervorrichtung mit einer Vielzahl von Rollen zur Förderung eines Artikels und einem Motor zum Antreiben der Rollen. Die Fördervorrichtung ist in eine Vielzahl von Fördersegmenten (in der EP 1 361 182 B1 als "module 2" bezeichnet) unterteilt. Anhand einer Steuerung wird die Tätigkeit des Motors gesteuert. Pro Fördersegment isoliert wird der Rotationszustand von einer Rolle des Fördersegments ermittelt. Durch Vergleich mit einem Standardwert kann isoliert auf das Fördersegment der gegenwärtige Status eines Förderguts bestimmt werden.

Das in der EP 1 361 182 B1 beschriebene Vorgehen ermöglicht Erkennung bestimmter Situationen isoliert an einem Fördersegment auf Basis vordefinierter Standardwerte.

WO 2019/115456 A1 beschreibt ein Verfahren zur Zustandsüberwachung in einer Förderanlage mit mehreren Fördersegmenten. Das Verfahren umfasst: Prüfen des Vorliegens eines Referenz-Betriebszustands; bei Vorliegen des Referenz-Betriebszustands, Ermitteln eines Stroms der Motorrolle, Vergleich des ermittelten Stroms der Motorrolle mit einem Referenzwert für den Referenz-Betriebszustand. So können Fehlerzustände an der Hardware der Fördertechnik erkannt werden, wie beispielsweise eine Blockierung der Motorrolle und/oder eines Lagers und/oder anderer Elemente eines Fördersegments sowie Getriebeschäden oder defekte Übertragungselemente. Als Referenzwerte für den Vergleich kann der ermittelte Strom einer weiteren Motorrolle des selben Fördersegments herangezogen werden.

US 2018/0284741 A1 offenbart ein System zum Datensammeln in einer industriellen Produktionsumgebung. Das System umfasst eine Datenerfassungsschaltung zur Auswertung einer Vielzahl von Erfassungswerten; eine Datenanalyseschaltung zur Analyse einer Teilmenge der mehreren Erfassungswerten, um einen Sensorleistungswert von mindestens einem der Vielzahl von Eingangssensoren zu ermitteln; eine Analysereaktionsschaltung, die einen Sensor-Skalierungswert oder einen Sensorabtastfrequenzwert als Reaktion auf den Sensorleistungswert anpasst.

Es ist Aufgabe der vorliegenden Erfindung, das Betreiben einer Förderanordnung effizienter und effektiver zu gestalten. Die der Erfindung zugrundeliegende Aufgabe wird gelöst durch ein Verfahren nach Anspruch 1; Ausgestaltungen sind Gegenstand der Unteransprüche sowie der Beschreibung.

Die Erfindung sieht vor, die beim Betrieb der Fördersegmenten anfallenden Fördersegmentdaten definiert zu sammeln und auszuwerten. Aus den Auswertungen lassen sich eine Vielzahl von Erkenntnissen herleiten, die für den weiteren Betrieb von Vorteil sind. Ein Aspekt betrifft dabei die Identifizierung von Datenmustern aus den Fördersegmentdaten. Diese Identifizierung macht es sich dabei zu Nutze, dass eine Vielzahl von Fördergüter über eine Vielzahl an Fördersegmenten in der Förderanordnung gefördert werden. Insofern kann in diesem Anwendungsfall einer Big-Data Analyse ein großer Datenschatz ausgewertet werden, der sich insbesondere durch ein hohes Maß an Vergleichbarkeit durch identische Rahmenbedingungen auszeichnet. Daher weisen die hierbei identifizierten Datenmuster ein besonders hohes Maß an Aussagekraft auf.

Grundsätzlich wird im Rahmen der vorliegenden Erfindung eine immense Menge von Daten generiert, die anhand z.B. eines selbstlernendes System, von neuronalen Netzen untersucht werden. Die Ergebnisse solcher Untersuchungen sind zunächst offen, versprechen aber Hinweise auf wirtschaftlich/technisch nutzbare Erkenntnisse.

Das Verfahren nimmt explizit eine Unterscheidung vor zwischen fördergutspezifischen und fördersegmentspezifischen Datenmustern.

Ein fördergutspezifisches Datenmuster kann einen Hinweis auf eine bestimmte Eigenschaft des Förderguts darstellen, insbesondere in Relation zu einem oder mehreren anderen Fördergütern. Durch diese Eigenschaft kann sich das jeweilige Fördergut z.B. körperlich von einem anderen Fördergut unterscheiden. Werden nacheinander zwei identische Fördergüter auf demselben oder einem identischen Fördersegment gefördert, so lassen sich die beim Fördervorgang erfassten Daten somit durch ein zugehöriges fördergutspezifisches Muster nicht voneinander unterscheiden.

Die Identifizierung der Datenmuster erfolgt dabei aufgrund eines Kontinuitätskriteriums im Regelbetrieb. Das Kontinuitätskriterium berücksichtigt dabei die zwangsläufige Tatsache, dass ein Fördergut immer zunächst an einem stromaufwärtigen Fördersegment präsent ist und nachfolgend an einem stromabwärtigen Fördersegment präsent ist. Aber auch ein Abhandenkommen eines Förderguts kann unmittelbar ermittelt werden, sobald an einem Fördersegment ein fördergutspezifisches Datenmuster in den dort anfallenden Fördersegmentdaten wider Erwarten nicht auftaucht.

Ein fördersegmentspezifisches Datenmuster kann immer dann auftreten, wenn ein jeweiliges Fördersegment eine bestimmte Eigenschaft aufweist ggf. Relation zu einem oder mehreren anderen Fördersegmenten. Von besonderem Interessen ist dabei ein solches fördersegmentspezifisches Datenmuster, wenn dieses in Relation zu den Fördersegmentdaten zumindest eines anderen Fördersegments auftritt, welches identisch zum jeweiligen Fördersegment ausgebildet ist.

Hierdurch kann auf eine Eigenschaft des jeweiligen Fördersegments rückgeschlossen werden, durch das sich das jeweilige Fördersegments von dem anderen Fördersegment unterscheidet. Sind die Fördersegmente identisch ausgebildet, so kann die Eigenschaft mit einem Defekt verbunden sein, der somit anhand der identifizierten Datenmuster entdeckt werden kann.

Auf die vorgenannte Weise lassen sich die anfallenden Fördersegmentdaten zur Erkennung von Anomalien an Fördergütern und Fördersegmenten nutzen.

Eine Besonderheit stellt dabei die Identifizierung der Datenmuster und Nutzung im laufenden Betrieb dar. Die Erzeugung der spezifischen Datenmuster erfordert dabei keine Anlernung im Vorfeld; vielmehr erfolgt die Erzeugung der Datenmuster fortwährend im laufenden Betrieb. Das Verfahren bildet somit selbst kontinuierlich weiter. Während im Stand der Technik oftmals vordefinierte Werte als Referenz zur Fehlererkennung verwendet werden (z.B. EP 1 361 182 B1), kommt die vorliegende Erfindung ohne eine solche Vordefinierung aus. Vereinfacht ausgedrückt: Das Verfahren ist in der Lage, sich anhand von Beobachtungen selbst virtuelle Referenzobjekte zu schaffen. Insofern zeichnet sich die Analysefähigkeit durch eine hohe Dynamik aus, die anhand von vordefinierten Standardwerte - wie im Stand der Technik - nicht erreichbar ist.

Aufgrund der Vielzahl von Fördergütern und der Vielzahl von Fördersegmenten kann dabei im Regelbetrieb bereits nach kurzer Betriebszeit ein enormer Datenschatz erzeugt werden, der auf Datenmuster und damit auf Abnormalitäten hin untersucht werden kann.

In einem Spezifizierungsschritt ist es vorgesehen, dass die Datenmuster einer Musterspezifikation zugeordnet werden. Die Zuordnung kann dabei unmittelbar mit der Identifizierung erfolgen und muss nicht nachgelagert sein. In dem Spezifizierungsschritt wird entschieden, ob ein Datenmuster entweder fördersegmentspezifisch oder fördergutspezifisch ist.

Die Zonensteuerung kann durch eine Steuerungseinheit gebildet sein, die die Ansteuerung mehrerer Fördersegmente übernimmt. Die Zonensteuerung kann separat ausgebildet sein oder innerhalb einer Förderrolle angeordnet sein (siehe z.B. WO 2020/127686 A1).

In einer Ausgestaltung weist jedes Fördersegment eine Präsenzerkennung, insbesondere einen Präsenzsensor, eingerichtet zur Erkennung der Anwesenheit eines Förderguts auf dem Fördersegment auf.

Als Präsenzerkennung muss nicht zwangsläufig ein expliziter Präsenzsensor vorgesehen sein; die Präsenzerkennung auf Basis der Auswertung von isolierten Motordaten kann genügen (siehe z.B. EP 1 361 182 B1 und WO 2020/127687 A1).

Ein Fördersegmentantrieb ist insbesondere dazu eingerichtet, eine Antriebskraft, isoliert für das zugeordnete Fördersegment bereitzustellen. Jedes Fördersegment weist insbesondere einen separaten Fördersegmentantrieb auf. Insbesondere grenzen sich benachbarte Fördersegmente dadurch voneinander ab, dass diese separat antreibbar sind.

Insbesondere stehen die Förderanordnungen eines Fördernetzwerks nicht derart miteinander in Wechselwirkung, dass innerhalb des Fördernetzwerks ein gemeinsamer Förderzweck verfolgt wird. Insbesondere erfolgt innerhalb des Fördernetzwerks kein Austausch von Fördergütern. Vielmehr dient das Fördernetzwerks zum Bereitstellen von Daten insbesondere zur wechselseitigen Optimierung von Verfahrensabläufen.

Die Erfindung ist anwendbar bei Förderanordnungen, die derart betrieben werden, dass in jedem Fördersegment (im Regelbetrieb) stets maximal ein Fördergut gefördert wird, und dass das Fördergut von einem stromaufwärtigen Fördersegment an ein stromabwärtiges Fördersegment gefördert wird.

Die Erfindung wird anhand der Figuren nachfolgend näher erläutert, hierin zeigt:
- Fig. 1: ein Fördersegment für eine Förderanordnung in perspektivischer Darstellung;
- Fig. 2: eine Förderanordnung mit einer Mehrzahl an Fördersegmenten nach Figur 1 in perspektivischer Darstellung;
- Fig. 3: eine Auswahl an Fördersegmentdaten eines ersten Datensatzes eines ersten Fördersegments der Förderanordnung nach Figur 2, die während des Betriebs generiert werden;
- Fig. 4: eine Auswahl an Fördersegmentdaten eines zweiten Datensatzes eines zweiten Fördersegments der Förderanordnung nach Figur 2 entsprechend der Auswahl nach Figur 3;
- Fig. 5: eine Datensammlung mit einer Vielzahl an Datensätzen umfassend die Datensätze aus den Figuren 3 und 4 und den Datensätzen weiterer Fördersegmente;
- Fig. 6: eine Datensammlung analog Figur 5 mit einem fördergutbezogenen Datenmuster;
- Fig. 7: eine Auswahl an Fördersegmentdaten des ersten Datensatzes des ersten Fördersegments der Förderanordnung nach Figur 2, die während des Betriebs generiert werden;
- Fig. 8: eine Auswahl an Fördersegmentdaten des zweiten Datensatzes des zweiten Fördersegments der Förderanordnung nach Figur 2 entsprechend der Auswahl nach Figur 7;
- Fig. 9: eine Datensammlung mit einer Vielzahl an Datensätzen umfassend die Datensätze aus Figuren 7 und 8 und den Datensätzen weiterer Fördersegmente;
- Fig 10.: ein Fördernetzwerk mit einer Mehrzahl an Förderanordnungen nach Figur 2 in schematischer Darstellung;
- Fig. 11: eine Förderanordnung des Fördernetzwerks aus Figur 2 in schematischer Darstellung;
- Fig. 12: ausschnittsweise eine Abwandlung der Förderanordnung nach Figur 11;
- Fig. 13: eine Förderanordnung mit angeschlossener Anzeigevorrichtung in einem ersten Anzeigezustand;
- Fig. 14: eine Förderanordnung mit angeschlossener Anzeigevorrichtung in einem zweiten Anzeigezustand;
- Fig. 15: a) die Anzeigevorrichtung aus Figur 14 mit eingefärbten Fördersegmenten mit zugehörigen Fördersegmentdaten,
b) eine Auswahl von Fördersegmentdaten, die Grundlage für die Anzeige nach Figur 15a sind;
- Fig. 16: graphische Farbzuordnungen aus der Anzeige nach Figur 15 in Einzeldarstellung in unterschiedlichen Zuständen;
- Fig. 17: Werteverteilungen als Basis für eine automatische Festlegung einer Farbzuordnung;
- Fig. 18: eine schematische Ansicht eines besonderen Förderguts.

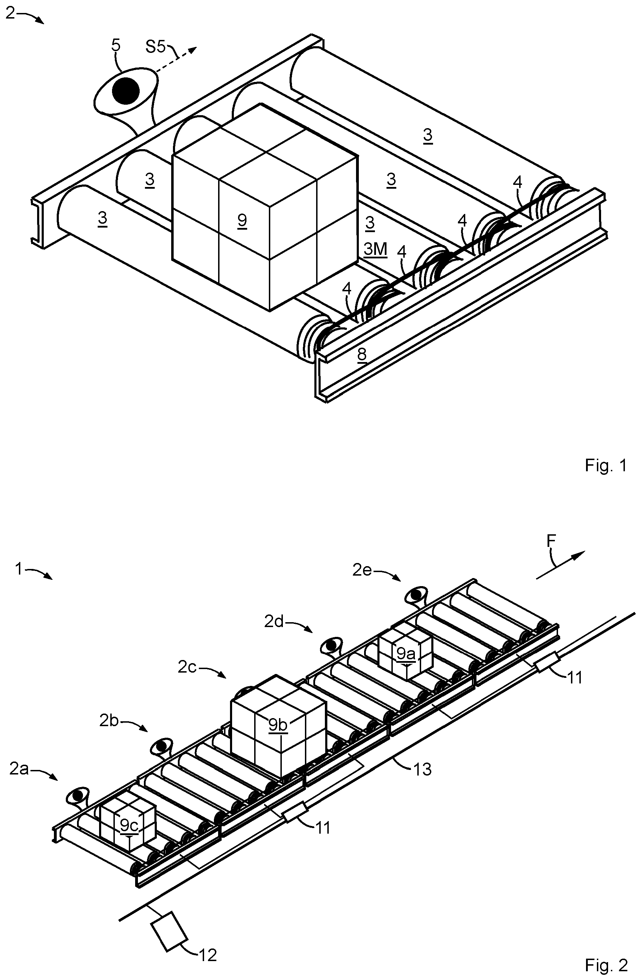

Die Figuren 1 und 2 werden nachfolgend gemeinsam beschrieben. Figur 2 zeigt eine Förderanordnung 1, die mehrere Fördersegmente 2a..2e umfasst. Solche Fördersegmente sind in Einzelheit in Figur 1 dargestellt.

Ein Fördersegment 2 umfasst mehrere Förderrollen 3, die gemeinsam angetrieben werden. Dazu ist eine der Förderrollen 3 als motorbetriebene Förderrolle 3M ausgebildet. Die motorbetriebene Förderrolle 3M wird insbesondere durch einen in der Förderrolle 3M angeordneten Drehstrommotor angetrieben. Über einen oder mehrere Antriebsverbinder 4, z.B. einen Antriebsriemen, sind die Förderrollen 3 eines Fördersegmentes 2 untereinander antriebsverbunden und werden durch die motorbetrieben Förderrolle 3M gemeinsam angetrieben.

Anhand eines Präsenzsensor 5 kann die Präsenz eines auf dem Fördersegment angeordneten Förderguts ermittelt werden. Der Präsenzsensor 5 muss dabei nicht das gesamte Fördersegment 2 erfassen; es genügt, wenn die Präsenz eines Förderguts 9 innerhalb eins Teilbereichs des Fördersegments 2 durch Präsenzsensor 5 erkannt wird. Der Präsenzsensor 5 erzeugt dabei ein Sensorsignal S5, welches über eine nicht dargestellte Signalleitung mit einer weiter unten vorgestellten Zonensteuerung 11 verbunden ist. Die Präsenserkennung kann auch ohne einen expliziten Sensor erfolgen und aus anderen Rohdaten abgeleitet werden. So gibt es bereits Ansätze, die Anwesenheit eines Förderguts auf dem Fördersegment aus anderen Daten herzuleiten, z.B. aus dem Verlauf der Stromstärke in einem Fördersegment.

Die Förderrollen 3 sowie der Präsenzsensor 5 sind an einem gemeinsamen Stützrahmen 8 befestigt. Die Förderrollen 3 von mehreren Fördersegmenten 2 können an einem gemeinsamen Stützrahmen 8 befestigt sein.

Die Fördersegmente 2 sind in der Förderanordnung 1 entlang einer Förderrichtung F hintereinander angeordnet. Von der Förderanordnung 1 werden die Fördergüter 9a..9c von einem Fördersegment 2a..2d auf das jeweils in Förderrichtung dahinter angeordnete (stromabwärtige) Fördersegment 2b..2e gefördert.

Die motorbetriebenen Förderrollen werden dabei jeweils von einer Zonensteuerung 11 angesteuert. Eine Zonensteuerung 11 kann dabei die motorbetriebenen Förderrollen mehrerer Fördersegmente 2 ansteuern. In der Förderanordnung 1 sind mehrere solcher Zonensteuerungen 11 angeordnet, die untereinander über eine Busverbindung 13 kommunizieren.

Die Zonensteuerungen 11 steuern dabei die motorbetriebenen Förderrollen 3M derart an, dass die nacheinander herangeförderten Fördergüter 9 nicht miteinander kollidieren. Die Ansteuerung erfolgt dabei derart, dass im Wesentlichen nur ein Fördergut 9 pro Fördersegment 2 vorhanden ist. Zu geringfügigen Überlappungen darf es allerdings kommen. So kann ein stromaufwärtiges Fördergut 9b bereits in ein Fördersegment 2d einfahren, obwohl das stromabwärtige Fördergut 9a diese Fördersegment 2d noch nicht vollständig verlassen hat. Als Eingangsgröße dient dabei unter anderem die Sensorsignale S5 der Präsenzsensoren 5, wobei allerdings sichergestellt wird, dass sich die beiden Fördergüter dann nicht berühren und damit gegenseitig beschädigen können.

In einer Ausgestaltung sind die die Zonensteuerungen 11 mit einer gemeinsamen übergeordneten Anlagensteuerung 12 verbunden, insbesondere über die Busverbindung 13, mit der auch die Zonensteuerungen 11 untereinander verbunden sind.

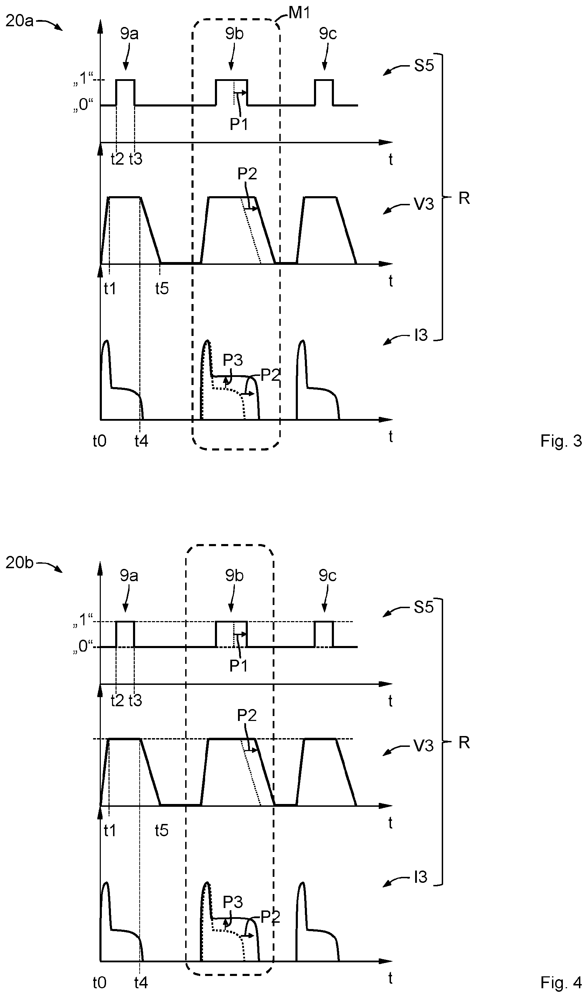

Während des Betriebs eines Fördersegments 2 werden eine Vielzahl an Fördersegmentdaten generiert und erfasst. Ein Datensatz 20a eines ersten Fördersegments 2a ist ausschnittsweise in der Figur 3 dargestellt. Die Fördersegmentdaten sind über die Zeit t aufgetragen.

Zunächst sollen die unterschiedliche Datenarten erläutert werden. Es wird im Rahmen der vorliegenden Beschreibung zwischen folgenden Datenarten unterschieden:
- Rohdaten R,
- abgeleitete Daten A,
- Datenmuster M.

Bei den Rohdaten handelt es sich um unmittelbar erfassbare Daten, die z.B. von den Sensoren erfasst werden oder durch die Steuerungen an der Busverbindung bereitgestellt werden.

Bei den abgeleiteten Daten A handelt es sich um Daten, die nicht unmittelbar erfassbar sind, die aber den unmittelbar erfassbaren Rohdaten eines Fördersegments informationstechnisch abgeleitet werden können. So kann beispielsweise aus einer Winkelgeschwindigkeit des Phasenwinkel des Drehstromes eine Fördergeschwindigkeit einer Förderrolle berechnet werden.

Die Rohdaten und die abgeleiteten Daten werden gemeinsam auch als Fördersegmentdaten bezeichnet, da diese eine Eigenschaft oder einen Zustand beschreiben, der momentan in einem Fördersegment auftritt.

Die Datenart "Datenmuster" wird weiter unten näher erläutert.

Die Fördersegmentdaten umfassen folgende Daten (Figur 3, 4):

Der Sensorwerts S5 des Präsenszensors 5:
Der Wert t ="1" zeigt an, dass ein Fördergut 9 durch den Präsenszensor 5 erkannt wird (für t2<t<t3). Der Wert "0" zeigt an, dass ein Fördergut 9 durch den Präsenszensor 5 nicht erkannt wird (für t<t2 und t>t3). Der Präsenzsensor 5 deckt dabei das Fördersegment nicht zwangsläufig vollständig ab. Das Fördergut kann folglich eingangsseitig bei t<t2 schon auf dem Fördersegment angeordnet sein, auch wenn dieses noch nicht durch den Sensorwert S5 angezeigt wird. Ebenso kann das Fördergut bei t>t3 ausgangsseitig noch auf dem Fördersegment angeordnet sein, auch wenn Sensorwert S5 bereits t=t3 auf den Wert "0" umschaltet. Die Sensorwerte gehören insbesondere Datenart "Rohdaten" an, da diese unmittelbar vom Sensor bereitgestellt werden.

### Die Geschwindigkeit V3:

Der Wert V3 gibt die Geschwindigkeit einer Rolle im Fördersegment 2 an. Dies betrifft insbesondere die Geschwindigkeit der Motorrolle 3M. Der Wert V3 liegt in der Regel aber nicht zwangsläufig als expliziter Geschwindigkeitswert vor, der beispielsweise durch einen Geschwindigkeitssensor ermittelt wird. So ist die Geschwindigkeit ein Beispiel eines abgeleiteter Datenwerts, der von der Winkelgeschwindigkeit der Phasenwinkel des Drehstromes, mit dem der Drehstrommotor der Motorrolle angetrieben wird, rechnerisch ermittelt wird. Diese Winkelgeschwindigkeit selbst ist wiederum ein Datenwert der Datenart Rohdaten und kann üblicherweise über den Frequenzumrichter des Drehstrommotors abgerufen werden.

Die Stromstärke I3:
Der Wert I3 gibt die Stromstärke des Stromes an, mit dem die motorbetriebene Förderrolle 3M angetrieben wird. Die Stromstärke I3 steht dabei in direktem Zusammenhang mit der Leistungsaufnahme der motorbetriebenen Förderrolle 3M. Die Stromstärke wird unmittelbar von dem Frequenzumrichter bereitgestellt und fällt somit unter die Datenart Rohdaten.

In einer Ausgestaltung umfasst ein Datensatz 20 weitere oder andere Fördersegmentdaten. Ein Datensatz 20x ist dabei stets einem spezifischen Fördersegment 2x zugeordnet und umfasst dabei stets Fördersegmentdaten, die während des Betriebs des zugehörigen Fördersegments anfallen, insbesondere generiert werden oder erfasst werden.

Anhand der Figur 3 wird ein üblicher Förderzyklus des Fördersegments 2a dargestellt. In einem solchen Betriebszyklus wird genau ein Fördergut 9 gefördert. Der Förderzyklus wiederholt sich folglich immer wieder dann, wenn ein weiteres Fördergut gefördert werden soll. Zum Zeitpunkt t<t0 ist das Fördersegment im Stillstand und die Förderrollen 3 drehen sich nicht. Von der Zonensteuerung eines stromaufwärtigen Fördersegments (nicht dargestellt) wird die Übergabe des ersten Förderguts 9a angekündigt. Die Zonensteuerung 11 des vorliegenden Fördersegments startet zum Zeitpunkt t=t0 nun die Förderrollen des Fördersegments durch ein entsprechendes Steuersignal. Die Stromstärke I3 schnellt auf einen Maximalwert und beschleunigt die Förderrollen 3, die zum Zeitpunkt t=t1 ihre Arbeitsgeschwindigkeit erreichen.

Zum Zeitpunkt t=t2 wird das Fördergut auf dem Fördersegment durch den Präsenzsensor erkannt.

Aufgrund des Sensorsignals des Präsenzsensors 5 wird zum Zeitpunkt t=t3 erkannt, wann eine hintere Kante des Förderguts 9a den Überwachungsbereich des Präsenzsensors 5 verlassen hat. Anhand der Rollengeschwindigkeit V3 kann nun ermittelt werden, wann das Fördergut 9a das Fördersegment 2a verlassen hat. Dementsprechend kann zum Zeitpunkt t4 nun die Antriebsleistung für die Motorrolle 3M abgeschaltet werden. Die Förderrollen 3 laufen aus und sind zum Zeitpunkt t=t5 im Stillstand.

Der vorgenannte Förderzyklus wiederholt sich dem Grunde nach jedes Mal, wenn ein weiteres z.B. ein zweites und drittes Fördergut 9b, 9c und so weiter auf demselben Fördersegment 2a gefördert wird. Die erfassten Fördersegmentdaten können sich dann dem Grunde nach ähneln. Die oben bezeichneten Zeitpunkte t0..t5 bezeichnen dabei Ereignisse innerhalb eines Förderzyklus, die in jedem Förderzyklus erneut auftreten können. Die Zeitpunkte t0..t5 und die damit bezeichneten Ereignisse treten somit in jedem regulären Förderzyklus erneut auf.

Zur Veranschaulichung sind die Verläufe der Fördersegmentdaten bei der Förderung des zweiten und des dritten Förderguts 9b und 9c aus Figur 2 im Diagramm der Figur 3 eingezeichnet. Abweichungen in dem Verlauf der Fördersegmentdaten können sich insbesondere aufgrund der Beschaffenheit des jeweiligen Förderguts 9 ergeben.

So ist beispielsweise das zweite Fördergut 9b deutlich größer und schwerer als das erste Fördergut 9a ausgebildet (siehe Figur 2). Die erhöhte Größe des zweiten Förderguts 9b bedingt unmittelbar ein längeres Verbleiben des zweiten Förderguts 9b im Überwachungsbereich des Präsenzsensors 5, was in Figur 3 durch den Pfeil P1 bei dem Sensorwert S5 dargestellt ist. Da die Fördersegmentdaten für die Förderung des zweiten Förderguts von denen des ersten und des dritten Förderguts 9a, 9c abweichen, werden diese im Folgenden als erstes Datenmuster M1 bezeichnet.

Entsprechend werden auch die Förderrollen 3 des ersten Fördersegments 2a entsprechend länger betrieben, um das zweite Fördergut 9b vollständig von dem ersten Fördersegment 2a wegzufördern. Dies ist durch die Pfeile P2 bei den Werten für die Motorstromstärke I3 und der Geschwindigkeit V3 dargestellt.

Das erhöhte Gewicht des zweiten Förderguts 9b bedingt zudem eine erhöhte Leistungsaufnahme der motorbetriebenen Förderrolle 3M. Nach dem Beschleunigen der Förderrollen und der Übernahme des Förderguts durch das erste Fördersegment 2a wird daher die motorbetriebene Förderrolle 3M mit einer erhöhten Leistung betrieben. Dies ist in der Figur 3 durch den Pfeil P3 beim Wert für den Motorstrom I3 dargestellt.

In einem Idealzustand werden die Fördersegmentdaten, die im ersten Fördersegment 2a erfasst werden, nun auch im zweiten Fördersegment gleichermaßen erfasst. Figur 4 zeigt analog zur Figur 3 die im zweiten Fördersegment 2b erfassten Fördersegmentdaten. Im Wesentlichen ergibt sich ein gleiches Datenbild, wobei die Fördersegmentdaten einer absoluten Zeitskala natürlich später erfasst werden. Die Zuordnung der Fördersegmentdaten zu dem jeweiligen Fördergut 9a-c bleibt aber gegeben.

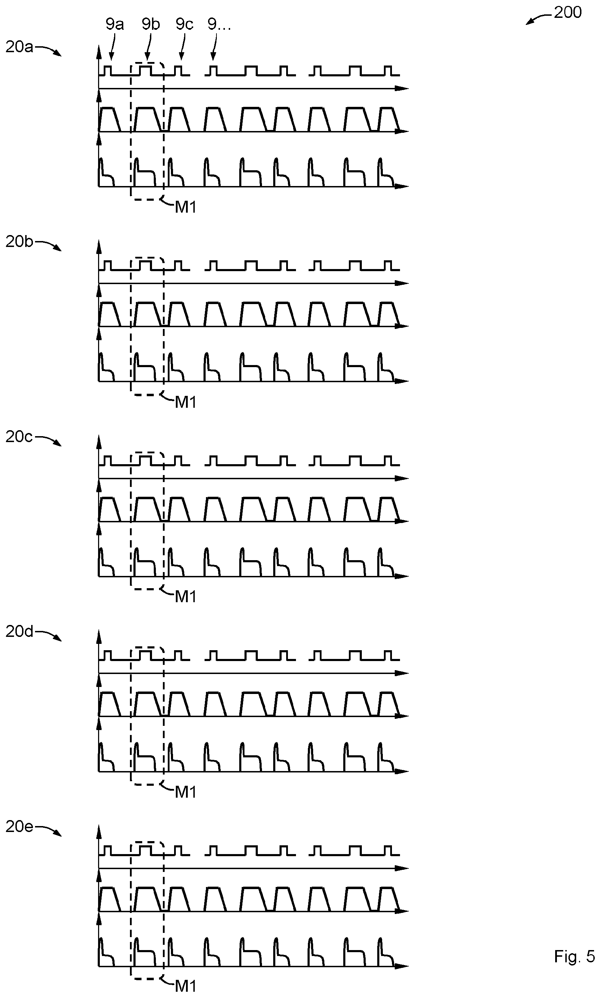

Figur 5 zeigt eine Datensammlung 200, umfassend die Datensätze 20a..20e der Fördersegmente 2a..e, die während der Förderung der Fördergüter 9a..c und weiterer Fördergüter erfasst wurden.

Eine Datensammlung 200 umfasst somit generell die Datensätze 20a...n mehrerer Fördersegmente, insbesondere die Datensätze aller Fördersegmente 2 der Förderanordnung 1.

Zu erkennen ist, dass das spezifische Datenmuster M1, das aufgrund der Förderung des Förderguts 9b im Datensatz 20a des ersten Fördersegment 2a erscheint, nun ebenfalls in den Datensätzen 20b..e aller weiterer Fördersegmente 2b..2e erscheint.

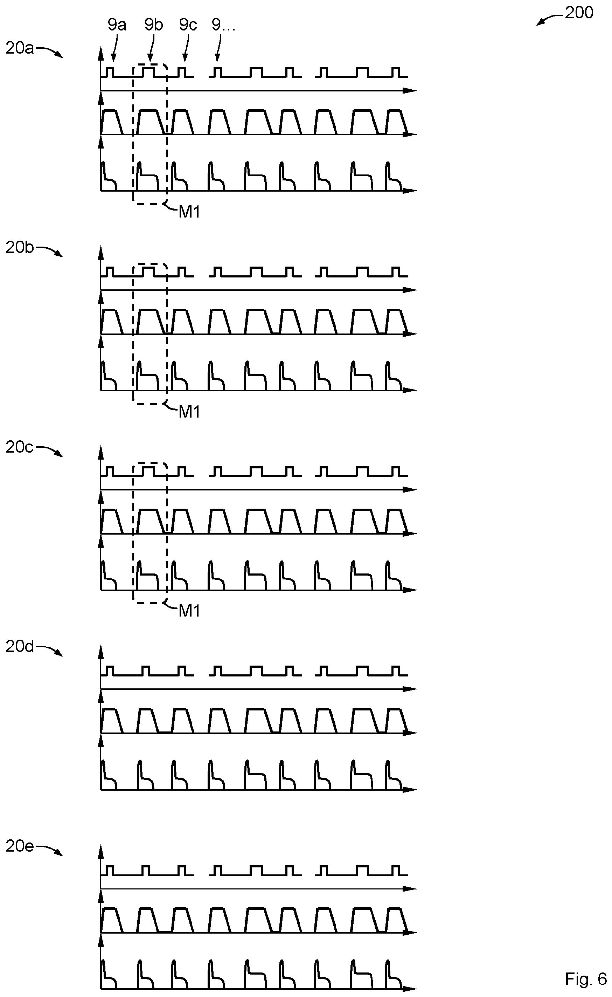

Figur 6 zeigt eine Datensammlung 200, die weitgehend der Datensammlung aus Figur 5 entspricht. Abweichend ist nun, dass das Muster M1 in den Datensätzen 20a..c der ersten drei Fördersegmente 2a..c erscheint, nicht aber in den Datensätzen 20d, 20e der vierten und fünften Fördersegmente 2.

Dies ist ein Hinweis auf eine Abnormalität. Die Ursache kann hier vielschichtig sein. Eine mögliche Ursache kann darin liegen, dass das Fördergut, das in der vierten und fünften Fördersegment erfasst wurde, nicht das zweite Fördergut 9b ist, das in den ersten drei Fördersegmenten erfasst wurde. Beispielsweise kann hier unerlaubter manueller Eingriff in **den Fördervorgang** stattgefunden haben, bei dem das Fördergut 9 ausgetauscht wurde. Die Abnormalität bezieht sich somit auf das Fördergut (fördergutbezogene Abnormalität).

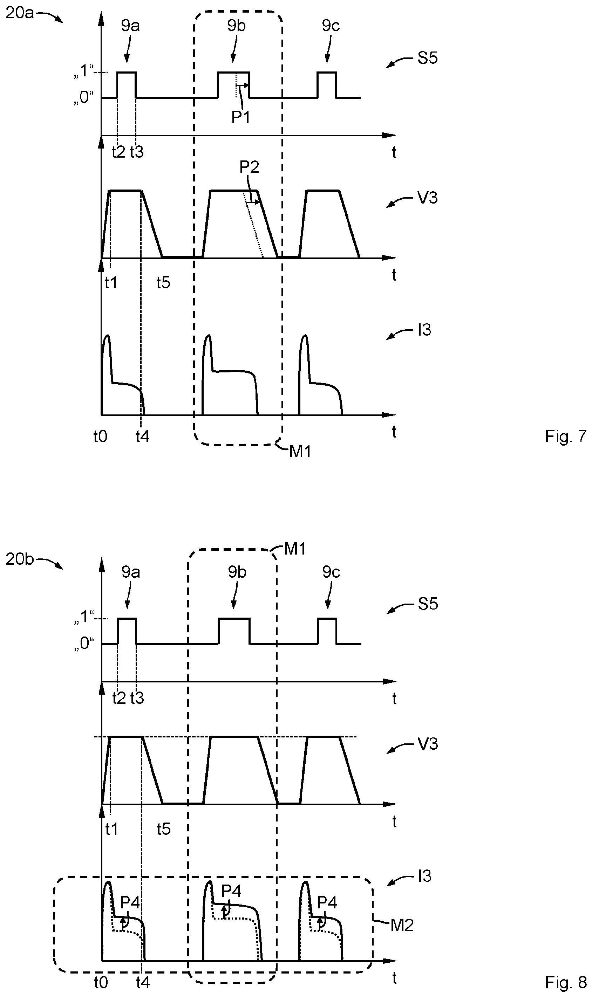

Die Figuren 7 und 8 zeigen analog zu den Figuren 3 und 4 die Datensätze, die bei der Förderung der Fördergüter 9a..c entlang der ersten beiden Fördersegmenten 2a, 2b erfasst werden. Hier wäre zu erwarten, dass sich die Datensätze sehr ähneln, da identische Fördergüter von gleichartiger Hardware gefördert und erfasst werden.

Beispielhaft unterscheiden sich nun die Werte für den Motorstrom I3 im Datensatz 2b des zweiten Fördersegments 2b signifikant von den Werten im ersten Datensatz 20a des ersten Fördersegments 2a. Die Stromstärke I3 ist im zweiten Fördersegment 2b dabei für sämtliche Förderzyklen aller Fördergüter 9a..9c größer in den entsprechenden Förderzyklen des ersten Datensatzes 20a des ersten Fördersegments 2a. Diese Abweichung ist in der Figur 8 durch die Pfeile P4 dargestellt. Die entsprechenden Fördersegmentdaten werden hierbei nachfolgend durch ein zweites Datenmuster M2 charakterisiert.

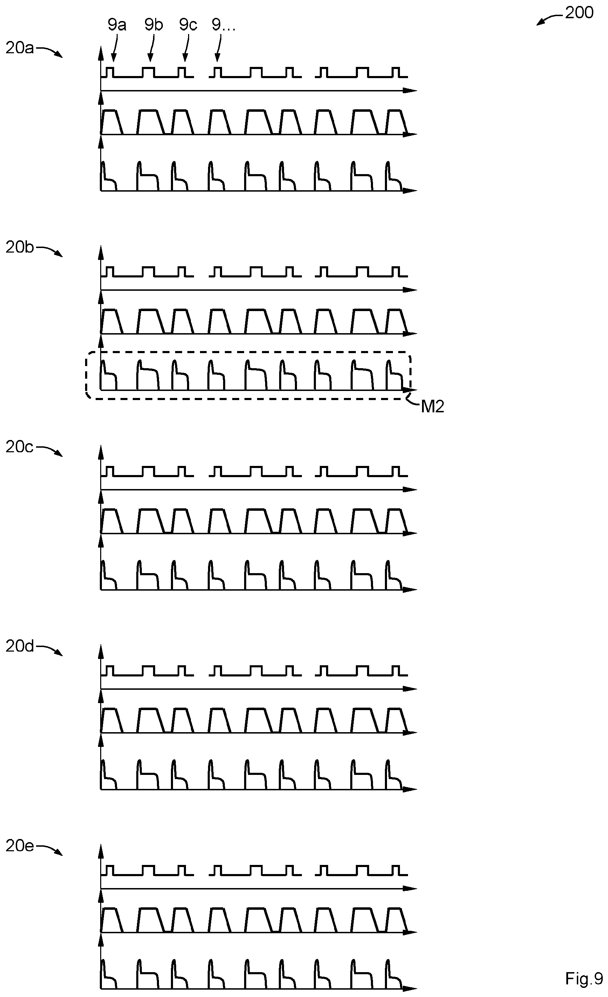

Figur 9 zeigt die Datensammlung 200 analog zu Figur 6. Hier erscheint das zweite Datenmuster M2 nur in dem zweiten Datensatz 20b des zweiten Fördersegments 2b. Da die übrigen Datensätze 20a, 20c..e dieses zweite Datenmuster M2 nicht aufweisen deutet dies auf strukturelle Besonderheiten im zweiten Fördersegment 2b hin. Eine mögliche Ursache könnte ein Defekt an einer der Förderrollen 3 des zweiten Fördersegments 2b sein. So kann beispielsweise ein Gegenstand sich zwischen der Förderrolle 3 und dem Stützrahmen 8 verklemmt haben, was eine bremsenden Wirkung auf die Rollen ausübt. Die motorbetriebene Förderrolle muss folglich mehr Leistung aufbringen. Die Abnormalität bezieht sich somit auf ein einzelnes Fördersegment (fördersegmentbezogene Abnormalität).

Zur Generierung von Datenmustern können gezielt mehrere Fördersegmente zeitlich koordiniert einen Datenmustergenerierungsmodus überführt werden. In diesem Modus vollziehen die Fördersegmente Aktionen, die aus fördertechnischer Sicht keinen Sinn erfüllen. So kann anhand einer kurzfristigen Beschleunigung einer motorbetriebenen Förderrolle ein Antwortverhalten des Förderguts provoziert werden, aus dem sich ein Datenmuster ableiten lässt. Die zeitliche Koordinierung ist insbesondere derart auszuführen, dass die Aktion immer dann ausgeführt wird, wenn ein identisches Fördergut an dem jeweiligen Fördersegment anwesend ist, um so z.B. ein fördergutspezifisches Datenmuster zu generieren. Zur Erzeugung von fördersegmentspezifischen Datenmuster kann die selbe Vorgehensweise sinnvoll sein, da aufgrund des identischen Förderguts über mehrere Fördersegmente identische Bedingungen bei der Generierung der Daten vorhanden sind.

Die Identifizierung der Datenmuster anhand der Fördersegmentdaten erfolgt in einer Ausgestaltung unter Berücksichtigung von gerätespezifischen Metadaten. Die gerätespezifischen Metadaten umfassen dabei statische Parameter der zugrundeliegenden Geräte. So können die motorbetriebenen Förderrollen z.B. unterschiedliche Leistungsstufen aufweisen, so dass sich die motorbetrieben Förderrollen in deren Ansprechverhalten voneinander unterscheiden, auch wenn die Fördersituation ansonsten identisch ist. Die Berücksichtigung kann beispielsweise wie folgt erfolgen:
In einer Möglichkeit werden die unterschiedlichen Geräteparameter rechnerisch kompensiert, wobei die abweichenden Fördersegmentdaten der zueinander abweichenden Geräte eine Vergleichbarkeit erhalten. Dieser Kompensation können die Fördersegmentdaten oder daraus generierte Datenmuster selbst verwendet werden, insbesondere in Form von Kompensationsmustern.

In einer anderen Möglichkeit werden Datenmuster nur anhand von Fördersegmentdaten erzeugt, die auf Basis gleichartiger Hardware generiert wurde.

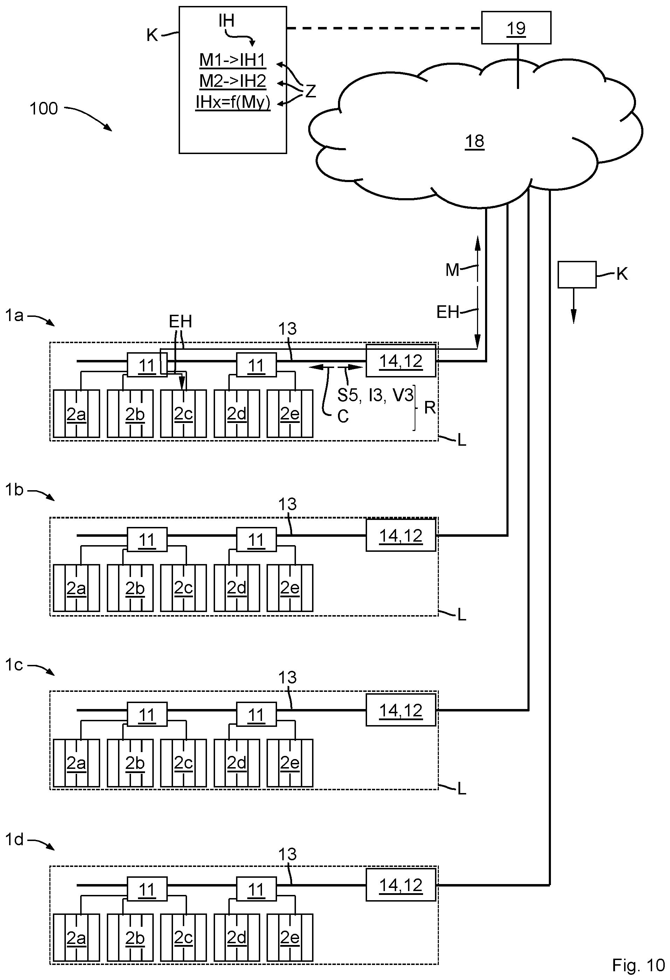

Figur 10 zeigt ein Fördernetzwerk 100. Das Fördernetzwerk 100 umfasst eine Vielzahl an Förderanordnungen 1a..d, wie in Figur 2 dargestellt. Die Förderanordnungen 1a..d sind insbesondere an weit entfernten Orten vorgesehen, gehören also nicht zu einer gemeinsamen Fertigungsstätte. Die Standorte der Förderanordnungen 1a..d zueinander sind somit zumindest 5km insbesondere zumindest 10km voneinander entfernt.

Die Anlagensteuerungen 12 der jeweiligen Förderanordnungen 1a..d sind über eine Datenfernverbindung 18 miteinander verbunden. Die Datenfernverbindung 18 ist aufgrund der entfernten Standorten zueinander internetbasiert, wobei der Datenaustausch Datenfernverbindung 18 mittels einer gesicherten Internetverbindung, insbesondere via VPN gesichert, erfolgen kann. Die Standorte der Förderanordnungen 1a..d sind nicht über ein lokales Datennetzwerk LAN miteinander verbunden.

Die Daten S5, I3, V3 (im folgenden auch Rohdaten R) der in den Fördersegmenten 2a..e erzeugten Datensätze 20a..e bzw. die Datensätze 20a..e selbst werden in einer lokalen oder internen Auswerteeinheit 14 gesammelt. Bei der lokalen bzw. internen Auswerteeinheit 14 kann es sich um die Anlagensteuerung 12 selbst handeln. Die Rohdaten R umfassen dabei auch Steuerungsdaten C, die von den internen Steuerungen 11, 12 zu den Komponenten der Fördersegmenten ausgegeben werden. Die Steuerungsdaten C können ergänzend zu den Darstellungen der Figuren 3 bis 9 auch Bestandteil der Datensätze bzw. Datensammlung sein.

Die Datensätze 20 umfassend die Rohdaten R und umfassen sehr große Datenmengen. Die Datensätze werden in Ihrem vollem Umfang daher nur in einem lokalen Bereich L vertrieben und gespeichert, in dem ein unternehmenseigenes Datennetzwerk große Datenmengen verwalten kann. Durch die Auswerteeinheit 14 erfolgt nun eine Aufbereitung der Rohdaten. So kann die interne Auswerteeinheit 14 aus den Rohdaten R die Datenmuster M1, M2 erkennen, die anhand der vorigen Figuren vorgestellt wurden. Solche Datenmuster M1, M2 können nun vergleichsweise datenarm über die Datenfernverbindung 18 an eine zentrale Auswerteeinheit 19 übermittelt werden.

Die Begriffe lokal und intern können dabei synonym verstanden werden.

Die Begriffe intern und extern beziehen sich dabei auf die Zugehörigkeit (intern) oder Nichtzugehörigkeit (extern) zu einer der Förderanordnungen 1a..e.

Die Musteridentifizierung kann alternativ oder zusätzlich auf der Zonensteuerung 11 stattfinden. Insbesondere findet in der Zonensteuerung 11 die Erzeugung von abgeleiteten Daten A statt, die durch die Rohdaten erzeugt werden.

Die zentrale Auswerteeinheit 19 ist insbesondere eine externe Auswerteeinheit.

Die zentrale Auswerteeinheit 19 kann die Datenmuster M1, M2 nun für Zwecke der vorausschauende Instandhaltung (predictive maintanance) nutzen und ggf. Kundendienstmaßnahmen veranlassen. Bei der Übertragung eines erkannten Datenmusters an die zentrale Auswerteeinheit 19 kann dabei eine konkrete Hardwarekomponenten der Förderanordnung verknüpft sein, so dass die Instandhaltungsmaßnahme zielgerichtet durchgeführt werden kann.

Die vorliegenden Erfindung beschränkt sich allerdings nicht auf Themen der vorausschauenden Instandhaltung, die abstrakt betrachtet bereits in anderen Technologiefeldern angewendet wird (z.B. bei Aufzügen, Automobilen, Flugzeugen). Vielmehr lassen die Erkenntnisse, die aus den anfallenden Daten anfallen, unmittelbar im laufenden Förderbetrieb nutzen.

So kann beispielsweise eine Handlungsanweisung EH von der zentralen Auswerteeinheit 19 an eine Förderanordnung 1a erzeugt werden, die dann von der jeweiligen Förderanordnung 1a umgesetzt wird. Eine solche Handlungsanweisung, die von der zentralen Auswerteeinheit 19 als Folge einer aktuellen Datenübermittlung erlassen wird, wird im Folgenden als externe Handlungsanweisung EH bezeichnet. Eine solche Handlungsanweisung kann in Abhängigkeit eines oder mehrerer erkannter Datenmuster M1, M2 ausgegeben werden. Eine solche externe Handlungsanweisung EH, die von der zentralen Auswerteeinheit 19 stammt, ist dabei vorzugsweise definiert einem Fördersegment 1a und/oder einer konkreten Hardwarekomponente in diesem Fördersegment z.B. einer Förderrolle 3M im Fördersegment 2c zugeordnet. Insbesondere greift dabei die Auswerteeinheit 19 nicht unmittelbar auf die entsprechende Hardwarekomponente und/oder auf die Rohdaten zu; vielmehr kann anhand der externen Handlungsanweisung EH die zugehörige Zonensteuerung 11 und/oder die Anlagensteuerung 12 angewiesen werden, die Hardwarekomponente in einer durch die Handlungsanweisung definierten Art und Weise anzusteuern.

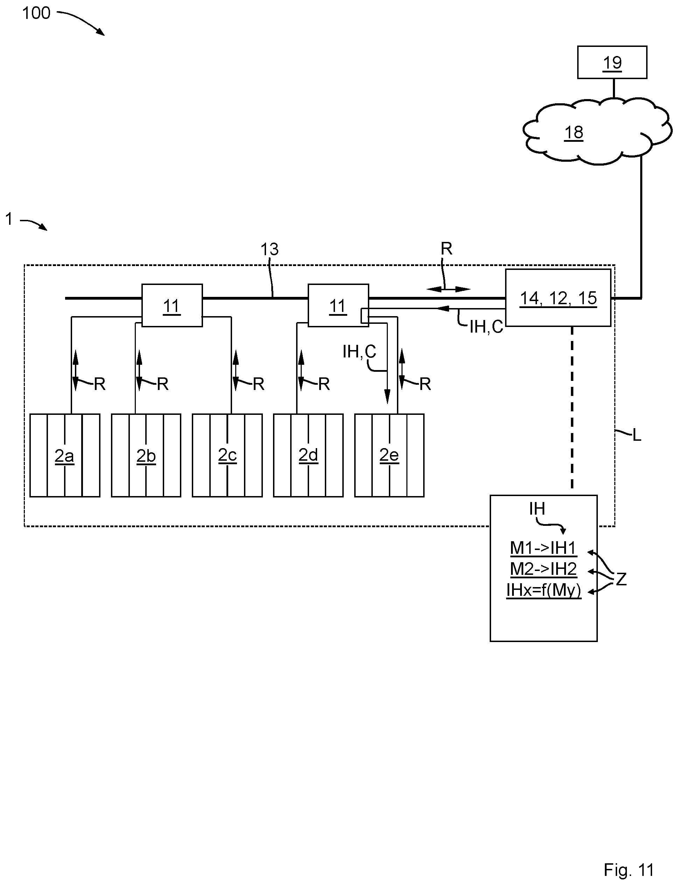

Im Gegensatz dazu stehen internen Handlungsanweisungen IH, die anhand der Figur 11 beschrieben werden. Interne Handlungsanweisungen IH werden von einer internen Steuerung 11, 12 ausgegeben, die Bestandteil einer Förderanordnung 1 ist. Die interne Handlungsanweisung IH wird anlassbezogen ausgegeben, insbesondere nach Erkennung eines spezifischen Datenmusters M1, M2.

Die Handlungsanweisung IH, EH sind insbesondere spezielle Steuerbefehle C oder können durch die internen Steuerungen in Steuerbefehle umgesetzt werden.

Als interne Steuerung einer Förderanordnung wird eine solche Steuerung verstanden, die lokaler Bestandteil der Förderanordnung 1 ist, also nicht über eine Datenfernverbindung 18 an die Förderanordnung 1 angeschlossen sind. Eine interne Steuerung ist insbesondere die Zonensteuerung 11 oder die Anlagensteuerung 12. Die zentrale Auswerteeinheit 19 ist insbesondere keine interne Steuerung.

Die interne Steuerung, hier beispielhaft die Anlagensteuerung 12, hat Zugriff auf eine Zuordnungstabelle Z. Die Zuordnungstabelle Z umfasst Zuordnungsvorschriften darüber, welche Handlungsanweisung IH1, IH2 mit dem Auftreten von welchem Datenmuster M1, M2 verknüpft ist. Wird in den Rohdaten R das Auftreten eines Datenmusters M2 erkannt, so wird basierend auf der Zuordnungsvorschrift die Handlungsanweisung IH2 z.B. für das Fördersegment 2e ausgegeben.

Die Zuordnungsvorschriften sind dabei nicht auf einzelne Fördersegmente beschränkt. So kann eine Zuordnungsvorschrift insbesondere derart lauten, dass bei Erkennung eines Datenmusters anhand von Rohdaten an den stromaufwärtigen Fördersegmenten eine Handlungsanweisung ausgegeben wird, die für ein stromabwärtiges fünftes Fördersegment bestimmt ist. Hiermit kann insbesondere ein aktiver Eingriff in das aktuelle Fördergeschehen vorgenommen werden, was insbesondere bei der Ermittlung von fördergutspezifischen Datenmustern relevant ist. Sofern also an mehreren stromaufwärtigen Fördersegmenten ein fördergutspezifisches Datenmuster M2 ermittelt wird, kann ein stromabwärtiges Fördersegment, an dem das betreffende Fördergut noch nicht angekommen ist oder zumindest nicht vollständig durchgefördert ist, mit einer Handlungsanweisung IH versehen werden, die die Besonderheiten des betreffenden Förderguts berücksichtigt.

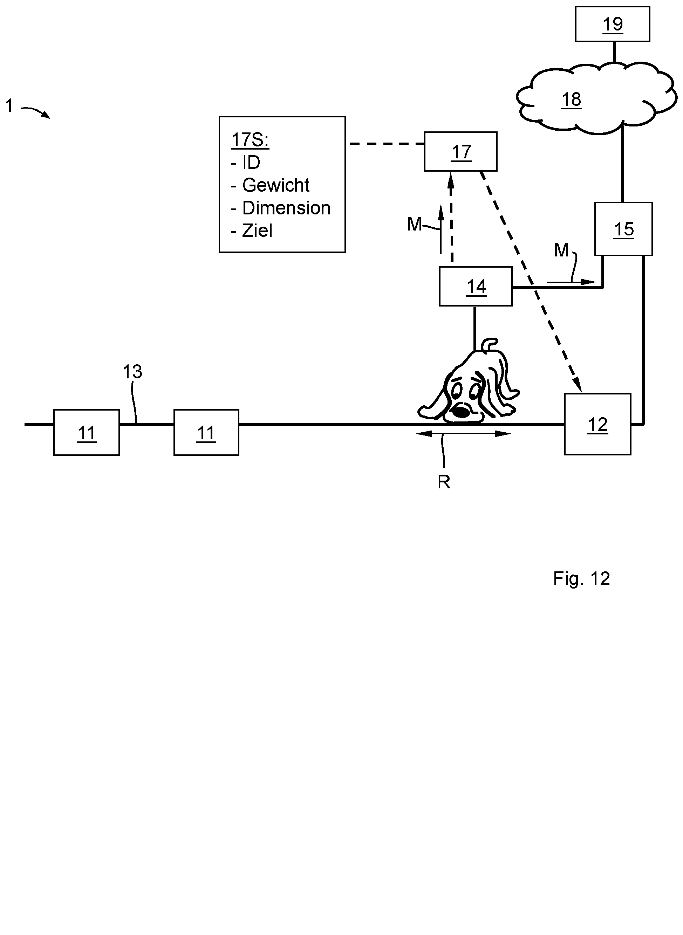

Die Auswerteeinheit 14 kann integral mit der Anlagensteuerung 12 ausgebildet sein, wie Figur 11 zeigt. Alternativ kann die Auswerteeinheit 14 separat zur Anlagensteuerung 12 ausgebildet sein, wie in Figur 12a gezeigt ist (die Fördersegmente sind hier nicht dargestellt). Die Auswerteeinheit ist insbesondere als sog. "Sniffer" ausgebildet und belauscht ("schnüffelt") die Kommunikation zwischen der Zonensteuerung 11 und der Anlagensteuerung 12, ohne diese Kommunikation zu beeinflussen. Hierbei ist bedeutsam, dass die lokale bzw. interne Auswerteeinheit 14 Zugriff auf die in mehreren Fördersegmenten 2a..e anfallenden Rohdaten R hat, insbesondere die Rohdaten R aller Fördersegmente in einer Förderanordnung, sowie optional Zugriff zu Steuerungsdaten C, die von der Anlagensteuerung 12 und/oder der Zonensteuerung 11 an die Aktuatoren der Fördersegmente 2 gesendet werden.

Zwischen der Anlagensteuerung 12 und der Auswerteeinheit 14 einerseits und der

Datenfernverbindung 18 andererseits kann ein Gateway 15 vorgesehen sein. Das Gateway ist insbesondere Bestandteil der Förderanordnung 1, der auch die Anlagensteuerung 12 bzw. die Auswerteeinheit 14 angehören. Das Gateway kann integral mit der Anlagensteuerung, mit der Auswerteeinheit 14 ausgebildet sein.

Die Anlagensteuerung 12 hat Zugriff auf eine Fördergutdatenbank 17. In der Fördergutdatenbank sind zu den zu fördernden Fördergütern 9 jeweils fördergutindividuelle Fördergutdatensätze 17S abgelegt. Ein Fördergutdatensatz 17S spezifiziert das Fördergut hinsichtlich deren Identifikation (z.B. Sendungsnummer eine Postdienstleisters), Gewicht, äußere Dimensionen (Länge, Breite Höhe) und Ziel des Förderguts. So ist beispielsweise die Angabe über das Ziel ein wichtiger Bestandteil bei der Anlagensteuerung, da basierend darauf der Pfad des Förderguts an Sortierstellen eingestellt wird.

Ein Fördergutdatensatz wird in der Regel von extern bereitgestellt, beispielsweise von einem Postdienstleister und enthält unter anderem Daten, die nicht durch die Rohdaten eines Fördersegments erzeugbar sind. So können die Rohdaten insbesondere nicht geeignet sein, das Ziel des Förderguts zu ermitteln.

Der Fördergutdatensatz 17S kann nun anhand der Rohdaten R, anhand der abgeleiteten Daten A oder anhand der Datenmuster M ergänzt werden. Lassen sich die Daten beispielsweise derart interpretieren, dass das Fördergut eine bestimmte Länge aufweist, so kann dies in den Fördergutdatensatz 17S geschrieben werden oder eine dort vorliegende falsche Information ersetzt werden.

Wie zuvor ausgeführt kann aufgrund eines förderspezifischen Datenmusters auf die aktuelle Länge des Förderguts in Förderrichtung betrachtet geschlossen werden. Aber ein Fördergut ist in der Regel nicht quadratisch oder kugelrund ausgebildet, meist sind Fördergüter unregelmäßig quaderförmig ausgebildet. Mit der Erkenntnis, welche Erstreckung des Fördergut in Förderrichtung aufweist, kann anhand des jeweils fördergutindividuellen Fördergutdatensatzes auf die Drehstellung des Förderguts geschlossen werden. Eine solche Drehstellung kann wiederum in den fördergutindividuellen Fördergutdatensatz geschrieben werden, so dass diese Information auch für andere Fördersegmente derselben Förderanordnung nutzbar ist.

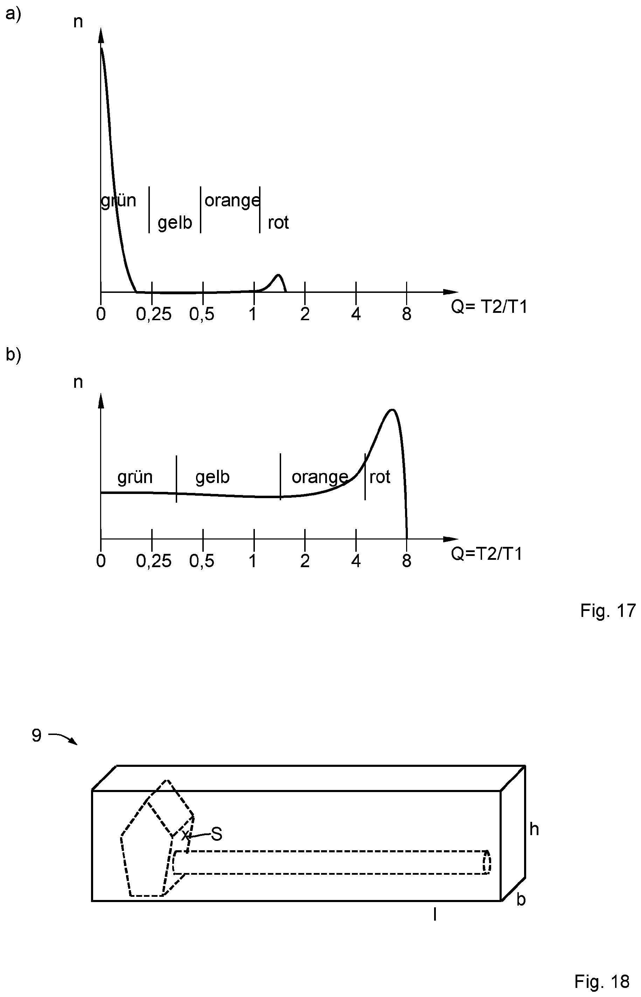

Figur 18 zeigt ein Beispiel eines besonderen Förderguts. Ein längliches Paket weist eine Länge I auf, die um ein vielfaches größer ist als die Höhe h und die Breite b. Zudem ist ein Schwerpunkt S in hohem Maße exzentrisch angeordnet. Ein solches Fördergut kann ein signifikant anderes Kippverhalten aufweisen als die meisten anderen Fördergüter auf, was sich in einigen Sortiervorrichtung als nachteilig herausstellen kann. Durch eine vorteilhafte Drehstellung, z.B. Schwerpunkt voraus, kann eine ordnungsgemäße Förderung sichergestellt werden.

Die zentrale Auswerteeinheit 19 kann einen Katalog K von internen Handlungsanweisungen IH sowie von solchen Zuordnungsvorschriften Z verwalten (Figur 10). Dieser Katalog K mit internen Handlungsanweisungen kann nun von der zentralen Auswerteeinheit 19 an die Förderanordnungen 1a.. 1e zur Verfügung gestellt werden. Die zentrale Auswerteeinheit 19 kann den Katalog stetig erweitern, da die zentrale Auswerteeinheit 19 über die Datenmuster zumindest mittelbar auf die Fördersegmentdaten von den Fördersegmenten von sehr vielen Förderanordnungen zurückgreifen kann.

So ist es möglich, durch stetige Analyse der Daten bzw. Datenmuster neue Handlungsanweisungen und entsprechende Zuordnungsvorschriften zu generieren den Katalog damit zu erweitern. Diese Erweiterungen werden den Förderanordnungen zur Verfügung gestellt, so dass die internen Steuerungen 11, 12 Zugriff auf die entsprechenden Handlungsanweisungen IH sowie von solchen Zuordnungsvorschriften erhalten.

In einer Ausgestaltung wird die Verarbeitung der Rohdaten R und Muster M im Netzwerk auf zumindest drei Einheiten 11, 14, 19 aufgeteilt. Die Zonensteuerungen 11 verarbeiten die Rohdaten R und können daraus bereits Muster erzeugen oder basierend auf Mustern Handlungsanweisungen umsetzen. Die Zonensteuerungen sind dabei ausgelegt, Verarbeitungen innerhalb einer ersten Reaktionszeit auszuführen.

Die lokalen bzw. internen Auswerteeinheiten 14 können ebenfalls Rohdaten R verarbeiten und Muster erzeigen erzeugen oder basierend auf Mustern Handlungsanweisungen umsetzen. Diese Auswerteeinheiten 14 sind dabei ausgelegt, Verarbeitungen innerhalb einer zweiten Reaktionszeit auszuführen. Nach Verarbeitung der Rohdaten zu Datenmustern können die Rohdaten auch gelöscht werden.

Die zentrale Auswerteeinheit 19 kann Datenmuster bearbeiten und basierend auf Mustern Handlungsanweisungen. Die zentrale Auswerteeinheit 19 ist dabei ausgelegt, Verarbeitungen innerhalb einer dritten Reaktionszeit auszuführen.

Die erste Reaktionszeit ist dabei kürzer als die zweite Reaktionszeit und die zweite Reaktionszeit ist dabei kürzer als die dritte Reaktionszeit.

Im Gegensatz zu der abfallenden Reaktionsgeschwindigkeit, je weiter die Einheiten vom Förderprozess entfernt sind, steigt die Datenkapazität an, je weiter die rechnende Einheit vom Prozess entfernt ist. So verfügt die zentrale Auswerteeinheit 19 über die größten Datenspeicherkapazitäten, während die Zonensteuerung 11 über die geringsten Datenspeicherkapazitäten verfügt.

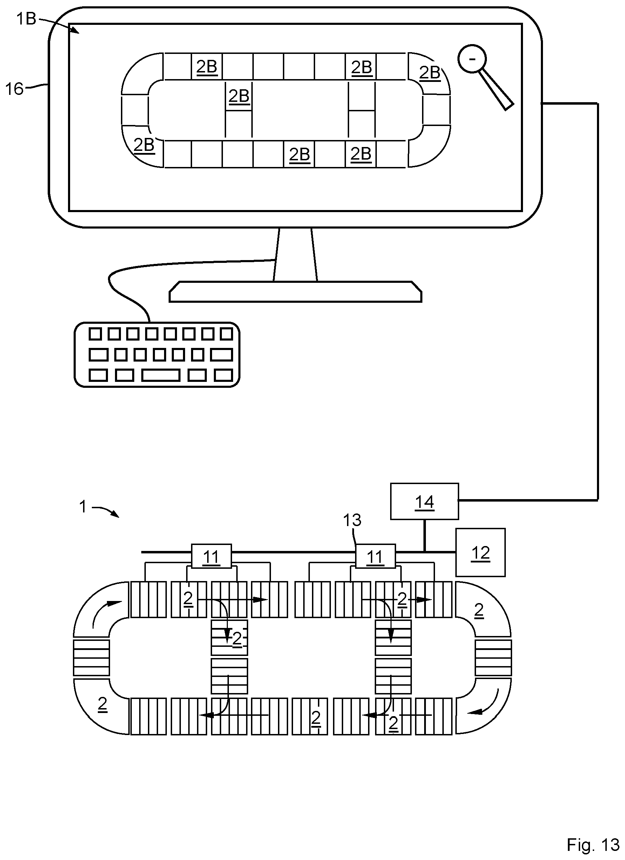

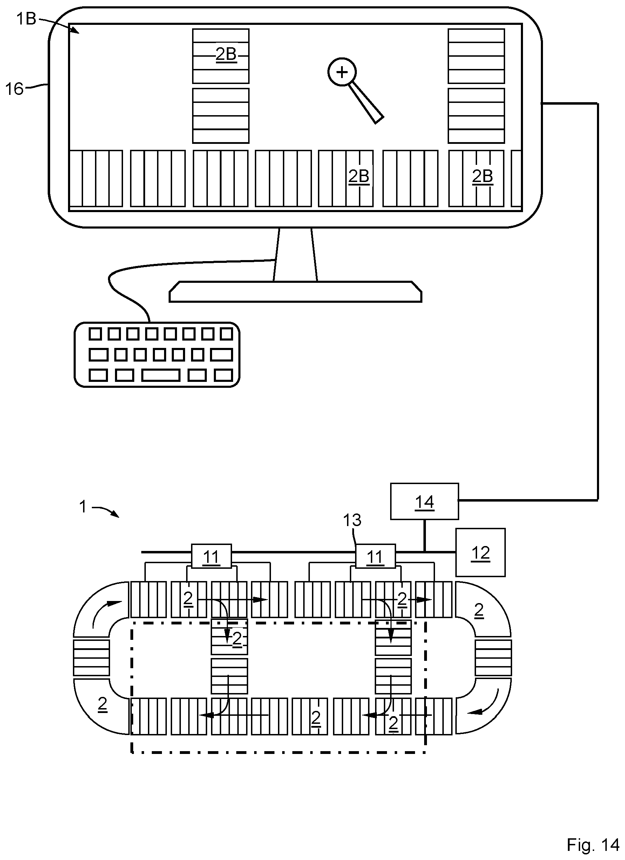

Die Figuren 13 und 14 zeigen die Förderanordnung 1 nach den vorherigen Figuren. Ergänzend sind hierbei weitere Fördersegmente eingezeichnet. So sind zusätzlich zu den geradlinigen Fördersegmenten aus den vorherigen Figuren nun auch andersartige Fördersegmente 2 dargestellt, wie z.B. Transferstellen und Kurven. Die Wege, entlang denen ein Fördergut gefördert wird, sind durch die Pfeile dargestellt. Auf die Art der Fördersegmente kommt es im Rahmen der nachfolgenden Beschreibung aber nicht an. Es stellvertretend für alle Fördersegmente nur vereinzelte Fördersegmente mit dem Bezugszeichen 2 versehen.

Über die Auswerteeinheit 14 wird die Kommunikation auf der Busverbindung 13 abgehört und ausgewertet. Auswerteergebnisse werden nun auf einer Anzeigevorrichtung 16 in Form eines Bildschirms graphisch wiedergegeben. Hierzu wird an der Anzeigevorrichtung 16 ein Abbild 1B der Förderanordnung 1 dargestellt. Das Abbild 1B der Förderanordnung umfasst dabei Abbilder 2B der Fördersegmente 2 der Förderanordnung 1. Die in der Förderanordnung 1 mit dem Bezugszeichen bezeichneten Fördersegmente sind in dem Abbild 1B jeweils durch Abbilder mit dem Bezugszeichen 2B repräsentiert.

Die Abbilder 2B der Fördersegmente stellen dabei die Fördersegmente 2 vorzugsweise in Draufsicht dar.

Die Abbilder 2B der Fördersegmente 2 sind in dem Abbild 1B so zueinander angeordnet, wie auch die realen Fördersegmente zueinander angeordnet sind. Grenzt in der realen Förderanordnung dabei ein Eingang eines zweiten Fördersegments an den Ausgang eines ersten Fördersegments an, so ist diese Relation auch in dem Abbild 1B gegeben.

Das Abbild 1B kann anhand eines Planungswerkzeug erstellt werden. Ein solches Planungswerkzeug ist beispielsweise eine Softwareanwendung, mit der aus den Datenmodellen von Einzelkomponenten eine Förderanordnung zusammengestellt werden kann, ähnlich bei der Konfiguration eines Neuwagens auf der Homepage des Herstellers. Aus einem bei der initialen Planung der Förderanordnung erzeugten Datenmodell kann das hier angewendete Abbild 1B erzeugt werden.

Hier kann sich ein Betriebsleiter (stellvertretend für jede andere Person, die sich für den Zustand der Förderanordnung interessiert) über die Funktion und den Zustand der Förderanordnung 1 informieren. Die Rohdaten werden dabei aufbereitet angezeigt, so dass der Betriebsleiter sich über visuelle Eindrücke mit wesentlichen Information aus der Förderanordnung versorgen kann.

Zunächst kann der Betriebsleiter anhand einer Zoomfunktion die Darstellung auf einen bestimmten Maßstab einstellen. Figur 13 zeigt in der Anzeigevorrichtung 14 ein Abbild 1B der Förderanordnung in einem kleineren Maßstab; Figur 14 zeigt in der Anzeigevorrichtung 14 ein Abbild 1B der Förderanordnung in einem größerem Maßstab.

Ein Detaillierungsgrad des Abbildes variiert dabei in Abhängigkeit des Maßstabs. So können mit einem größerem Maßstab pro Fördersegment mehr Details dargestellt werden als bei einem kleineren Maßstab.

Um dem Betriebsleiter auf intuitive Weise Informationen über den Zustand der Förderanlage zu vermitteln können die Rohdaten graphisch aufbereitet werden. So können die einzelnen Fördersegmente entsprechend der Rohdaten eingefärbt werden.

In den nachfolgenden Figuren werden dafür Beispiele aufgeführt, wobei die Einfärbungen entsprechend textlich illustriert sind, da in Patentzeichnungen keine Farben verwendet werden können.

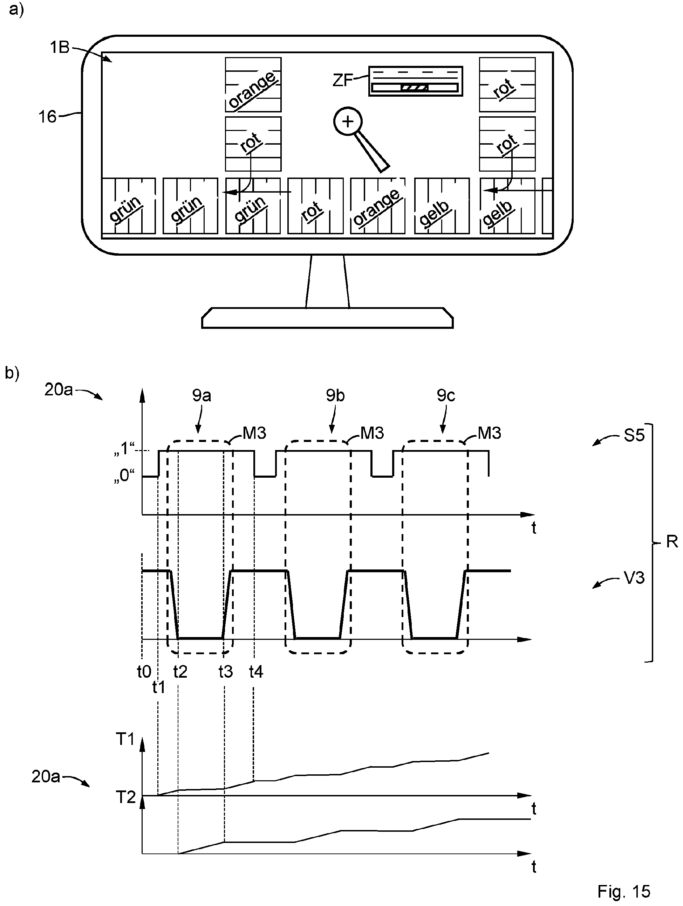

Figur 15a visualisiert einen Zustand, welcher häufig in einer Förderanordnung auftritt. Durch die zusammenführenden Pfeile wird eine Transferstelle visualisiert, an der zwei Förderpfade aufeinandertreffen und zusammengeführt werden. Hier kann es vermehrt zu Staubildungen kommen, wenn mehr Fördergüter an die Transferstelle herangeführt werden als abgeführt werden.

Die Farbcodierung gibt dabei eine Hinweis auf eine Stausituation an, ähnlich der Darstellung des Staugeschehens auf einer digitalen Straßenkarte. Ein solcher Stau an Fördergütern lässt sich durch die Rohdaten R isoliert nicht unmittelbar ablesen. Vielmehr bedarf es einer Auswertung der Rohdaten durch die Auswerteeinheit, insbesondere unter Verwendung einer Mustererkennung.

Ein Stau an Fördergütern kann insbesondere durch ein spezielles Muster der Rohdaten umfassend das Signal S5 des Präsenzsensors 5 und der Geschwindigkeit V3 einer Förderrolle 3 erkannt werden, was in Figur 15b illustriert ist. Zum Zeitpunkt t0 dreht sich die Förderrolle (V3>0) und ein erstes Fördergut 9a wird von einer vorhergehenden Fördersegment herangefördert S5= "1"). Zum Zeitpunkt t1 wird das erste Fördergut 9a vom Präsenzsensor 5 erkannt. Zum Zeitpunkt t2 ist die Fördergeschwindigkeit V3 gleich Null, obwohl das erste Fördergut a noch auf dem Fördersegment vorhanden ist und weitergefördert werden möchte. Dies kann als klarer Hinweis auf eine Stausituation gedeutet werden, da das Fördergut nun nicht an das stromabwärtige Fördersegment gefördert wird. Erst nach Ablauf einer Wartezeit zum Zeitpunkt t3 läuft das Fördersegment wieder an und das erste Fördergut 9a verlässt zum Zeitpunkt t4 den Erkennungsbereich des Präsenzsensors 5. Das entsprechende Datenmuster M3 wiederholt sich auch für die nachfolgenden Fördergüter 9b, 9c. Das dritte Datenmuster M3 wird daher im Verfahrensschritt "Spezifizieren" als fördersegmentspezifisches Datenmuster spezifiziert.

Die Einfärbung kann dabei anhand der folgenden Algorithmen erfolgen. Wie zuvor erläutert ist es für das dritte Datenmuster M3 charakteristisch, dass trotz erkanntem Fördergut auf dem Fördersegment die Fördergeschwindigkeit während eines signifikanten Zeitraums Null beträgt.

Eine erste Dauer T1 ist dabei die Summe aus den Zeiträumen, in denen ein Fördergut im Erkennungsbereich des Präsenssensors 5 ist und die Fördergeschwindigkeit V3 ungleich 0 ist. Die erste Dauer T1 setzt sich im vorliegenden Beispiel aus den Zeiträumen t1< t < t2 sowie t3<t<t4 zusammen, aufsummiert über mehrere Förderphasen von mehreren Fördergütern 9a..c.

Eine zweite Dauer T2 ist dabei die Summe aus den Zeiträumen, in denen ein Fördergut im Erkennungsbereich des Präsenssensors ist, aber die Fördergeschwindigkeit V3 gleich 0 ist. Folglich ist ein Fördergut vorhanden, welches gefördert werden soll, es wird aber nicht gefördert. Die zweite Dauer T2 setzt sich aus den Zeiträumen t2< t < t3 zusammen, aufsummiert über mehrere Förderphasen von mehreren Fördergütern 9a..c.

Je größer nun der Anteil der zweiten Dauer T2 gegenüber der ersten Dauer T1 ist, desto niedriger ist die effektive Förderleistung an Fördergütern, die gefördert werden sollen. Der Quotient Q aus T2/T1 stellt damit ein Maß für das Stauaufkommen an dem Fördersegment dar. Dieser Quotient Q wird nun als Stauwert bezeichnet. Jedem Fördersegment kann nun ein fördersegmentspezifischer Stauwert Q zugeordnet werden.

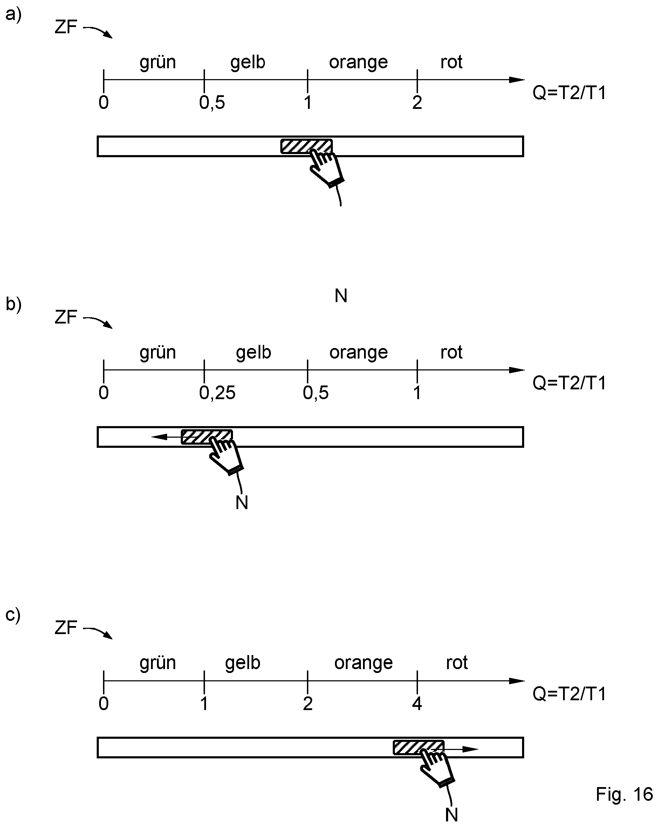

Anhand einer hinterlegten Farbzuordnung ZF (Figur 16) kann dem Stauwert Q eine Farbe zugeordnet werden, mit der das Abbild 2B des entsprechenden Fördersegments gemäß Figur 15 versehen wird, z.B. mit der Maßgabe: "Je größer der Stauwert desto roter!"

Die Farbzuordnung F liefert dabei jedem Stauwert Q eine entsprechende Farbe. Nach der Zuordnung nach Figur 16a wird beispielsweise das Fördersegment mit der Farbe rot eingefärbt, wenn der Stauwert größer als 2 ist. Nach der Zuordnung nach Figur 16a wird beispielsweise das Fördersegment mit der Farbe grün eingefärbt, wenn der Stauwert Q kleiner als 0,5.

Die Farbzuordnung gilt dann für alle dargestellten Fördersegmente, so dass anhand der Farbzuordnung etwaige Stau-Hotspots leicht identifiziert werden können.

Der Nutzer hat nun die Möglichkeit, die Farbzuordnung anzupassen. So kann er anhand einer Nutzereingabe N die Farbzuordnung ZF anpassen. Die Nutzereingabe ist als Schieberegler beispielhaft illustriert, anhand dem die Grenzwerte zwischen den einzelnen Farben verschoben werden können. Die Figuren 16 b und 16c zeigen dann Farbzuordnungen, die aufgrund einer Nutzereingabe geändert wurden. Die Einfärbungen der Fördersegmente können sich unmittelbar mit der Nutzereingabe ändern, so dass der Nutzer einen geeigneten Farbkontrast leicht einstellen kann. Der allgemeinere Begriff Festlegen umfasst dabei ein initiales Festlegen der Farbzuordnung sowie das spätere Ändern der Farbzuordnung.

Anhand der Figur 17a wird beispielhaft illustriert, wie eine Farbzuordnung ZF automatisiert verändert werden kann. Der Wert n bezeichnet hierbei eine Anzahl von Fördersegmenten, für denen ein gewisser Stauwert zugeordnet ist. Zu erkennen ist, dass die meisten Fördersegmente einen Stauwert Q < 0,25 aufweisen und. Lediglich ein geringe Anzahl weist einen Stauwert von Q - 1,5 auf. Stauwerte Q > 2 treten nicht auf.

Hierbei wird die Farbzuordnung nun so gewählt, dass die Maximalwerte automatisch in den roten Bereich fallen und damit visuell hervorgehoben werden.

Im Falle der Figur 17b herrscht im Bereich zwischen 0 und 4 eine Gleichverteilung. Im Bereich über 4 steigt die die Anzahl stark an. Auch werden die maximalen Stauwerte von Q=8 in den roten Bereich gesetzt. Um nun einen farblichen Kontrast zu generieren werden die Grenzen mit den weiteren Farben gelb und orange gleichmäßig im Gesamtbereich der auftretenden Stauwerte verteilt.

Die logarithmische Darstellung und die damit verbundene Verteilung ist hier nur beispielhaft; gleichsam ist eine lineare Darstellung mit entsprechender Verteilung möglich.

In einer Ausgestaltung wird die Farbzuordnung initial auf Basis der zugrudneliegenden Daten automatisch festgelegt. Anschließend wird dem Nutzer die Gelegenheit gegeben, die Farbzuordnung anhand einer Nutzereingabe zu verändern.

Ein weiterer Anwendungsfall der farblichen Einfärbung ist die Anzeige der Betriebsdauer einzelner Komponenten. Insbesondere Förderrollen weisen eine Nominallebensdauer auf. So kann aus den Rohdaten die Gesamtlaufzeit einer motorbetriebenen Förderrolle abgeleitet werden. Basierend auf der abgeleiteten Gesamtlaufzeit kann dann die Färbung eingestellt werden.

Auf diese Weise kann sich der Nutzer ein Bild von der Verteilung der Laufzeiten in der Förderanordnung machen und ggf. einzelne Förderrollen vorzeitig ersetzen. Alternativ lassen sich die Förderrolle einfach austauschen. So kann eine im Abbild grün eingefärbte Förderrolle mit einer im Abbild rot eingefärbten Förderrolle die Positionen tauschen. Eine bislang hoch beanspruchte Förderrolle wird so in eine Position in Förderanordnung eingesetzt, die eine geringer Auslastung der Förderrolle bedingt. Die gesamte Förderanordnung kann so effizienter genutzt werden und die Wahrscheinlichkeit für Verschleißausfälle reduziert werden.

Ein weiterer Anwendungsfall der farblichen Einfärbung ist die Darstellung von elektrischen Leistungsdaten. So können in einem Fördersegment die Summe der anfallenden elektrischen Leistung angezeigt werden (die aktuelle Leistung oder die durchschnittliche Leistung über einen gewissen Zeitraum). Etwaige Risiken von Überlastungen von Netzteilen, die die Versorgung mit elektrischer Energie sicherstellen, kann so visuell dargestellt werden.

Die enormen anfallenden Datenmengen erfordern eine definierte Verwaltung. Insbesondere sind Daten nach einer vordefinierten Weise zu löschen. So werden fördergutspezifische Datenmuster intern aus der internen Auswerteeinheit 14 der betreffenden Förderanordnung zumindest nach einer vordefinierten Zeit gelöscht, nachdem das Fördergut die Förderanordnung verlässt. Fördersegmentspezifische Muster werden nach einer vordefinierten Zeit aus der internen Auswerteeinheit 14 der betreffenden Förderanordnung gelöscht, nachdem die Ursache für das fördersegmentspezifische Muster behoben wurde, beispielsweise nachdem eine defekte motorbetriebene Förderrolle ausgetauscht wurde.

Die Löschung wird dabei auf unterschiedlichen Ebenen gehandhabt: Selbst nachdem die Ursachen (spezielles Fördergut, defekte Hardware) der Datenmuster nicht mehr in den entsprechenden Förderanordnungen vorhanden sind, können die Datenmuster für eine weitere Verwendung der zentralen Auswerteeinheit zur Verfügung stehen, insbesondere in einer zentralen Datenbasis.

### Bezugszeichenliste

- 1: Förderanordnung
- 1B: Abbild der Förderanordnung
- 2a...e: Fördersegment
- 3: Förderrolle
- 3M: Motorrolle
- 4: Verbinder
- 5: Präsenzsensor
- 8: Stützrahmen
- 9: Fördergut
- 100: Fördernetzwerk
- 11: Zonensteuerung
- 12: Anlagensteuerung
- 13: Busverbindung
- 14: lokale / interne Auswerteeinheit
- 15: lokales Gateway
- 16: Anzeigevorrichtung
- 17: Fördergutdatenbank
- 17S: Fördergutdatensatz
- 18: Datenfernverbindung
- 19: zentrale Auswerteeinheit
- 20a...e: Datensatz eines Fördersegments
- 200: Datensammlung von Datensätzen mehrerer Fördersegmente
- F: Förderrichtung
- R: Rohdaten:
S5 Signal eines Präsenzsensors
I3 Motorstrom der motorbetriebene Förderrolle
C Steuersignale

Abgeleitete Daten:
- V3: Geschwindigkeit der motorbetriebenen Förderrolle
- L: Länge eines Förderguts
- M: Datenmuster
- M1, M2..: erstes, zweites, .. Datenmuster
- T1, T2: erste, zweite Dauer
- L: lokaler Bereich
- ZF: Farbzuordnung

## Patentansprüche

1. Verfahren zum Betreiben einer Förderanordnung (1), insbesondere umfassend die Steuerung und/oder die Überwachung der Förderanordnung,
wobei die Förderanordnung (1) eine Mehrzahl an Fördersegmenten (2) umfasst, wobei
jedes Fördersegment (2) zur Förderung eines Förderguts (9) entlang einer Förderrichtung (F) eingerichtet ist;
wobei ein Fördersegment (2) mehrere Förderrollen (3) umfasst, wobei eine der Förderrollen (3) als motorbetriebene Förderrolle (3M) ausgebildet ist, wobei über einen oder mehrere Antriebsverbinder (4) die Förderrollen (3) eines Fördersegmentes (2) untereinander antriebsverbunden sind und durch die motorbetriebene Förderrolle (3M) gemeinsam angetrieben werden,
wobei die Fördersegmente (2) derart nacheinander angeordnet sind, dass das Fördergut (9) von einem stromaufwärtigen Fördersegment (2a..2d) an ein stromabwärtiges Fördersegment (2b..e) übergeben wird,
wobei jedes Fördersegment (2) einen Fördersegmentantrieb (3M) aufweist, der eingerichtet ist, eine Antriebskraft, insbesondere isoliert für dieses Fördersegment, bereitzustellen, um so das Fördergut (9) auf diesem Fördersegment zu fördern;
wobei jedes Fördersegment (2) einen Präsenzsensor (5) aufweist, welcher zur Erkennung der Anwesenheit des Förderguts (9) auf dem Fördersegment (2) eingerichtet ist,
wobei jedem Fördersegment (2) eine Zonensteuerung (11) zur Steuerung des Fördersegmentantriebs (3M) zugeordnet ist;
wobei die Förderanordnung derart betrieben wird, dass in jedem Fördersegment im Regelbetrieb stets maximal ein Fördergut gefördert wird,
das Verfahren umfassend
die folgenden Verfahrensschritte:
**Erfassen** von Fördersegmentdaten (R), nämlich Datensätzen eines jeweiligen Fördersegments, die beim Betrieb der Fördersegmente (2)
anfallen, wobei die Fördersegmentdaten jeweils umfassen:
- den Sensorwert des Präsenzsensors (5),
- die Geschwindigkeit einer Rolle im Fördersegment (2),
- die Stromstärke des Stromes, mit dem die motorbetriebene Förderrolle (3M) eines Fördersegments angetrieben wird,
**Sammeln** der Fördersegmentdaten (R) der Vielzahl von Fördersegmenten; und
**Identifizieren,** insbesondere in einem Musteridentifizierungsschritt, von Datenmustern (M) aus der Datensammlung (200);
**Spezifizieren,** insbesondere in einem Musterspezifizierungsschritt, der identifizierten Datenmuster (M),
wobei einem Datenmuster eine Musterspezifikation aus einer Mehrzahl von Musterspezifikationen zugeordnet wird,
wobei die Mehrzahl von Musterspezifikationen
- fördergutspezifische Datenmuster (M1) und
- fördersegmentspezifische Datenmuster (M2), umfasst,
wobei beim Spezifizieren entschieden wird, ob ein Datenmuster entweder fördersegmentspezifisch oder fördergutspezifisch ist,
wobei die anfallenden Fördersegmentdaten (R) zur Erkennung von Anomalien an Fördergütern und Fördersegmenten genutzt werden,
wobei ein fördergutspezifisches Datenmuster (M1) ein Datenmuster ist, das aufgrund der Förderung eines Förderguts (9) im Datensatz eines Fördersegments erscheint,
wobei das Identifizieren eines fördergutspezifischen Datenmusters aufgrund eines Kontinuitätskriteriums im Regelbetrieb erfolgt, welches die Tatsache berücksichtigt, dass ein Fördergut immer zunächst an einem stromaufwärtigen Fördersegment und nachfolgend an einem stromabwärtigen Fördersegment präsent ist,
wobei ein Anhandenkommen eines Förderguts ermittelt wird, sobald an einem Fördersegment ein fördergutspezifisches Datenmuster in den dort anfallenden Fördersegmentdaten wider Erwarten nicht auftaucht,
wobei ein fördersegmentspezifisches Datenmuster (M2) umfasst: Werte für den Motorstrom eines Fördersegments bei aufeinanderfolgender Förderung mehrerer Fördergüter (9a, 9b, 9c),
wobei strukturelle Besonderheiten in einem Fördersegment erkannt werden, wenn ein fördersegmentspezifisches Datenmuster (M2) in einem Datensatz eines Fördersegments erscheint und in den Datensätzen der übrigen Fördersegmente nicht erscheint.

2. Verfahren nach dem vorherigen Anspruch,
**dadurch gekennzeichnet,**
**dass** die Fördersegmentdaten Rohdaten (R) sowie abgeleiteten Daten (A) umfassen;
wobei die Rohdaten (R) solche Daten umfassen, die anhand eines im Fördersegment (2) angeordneten Sensors (5) erfasst werden (I3, S5) oder als Steuerdaten (C) zur der Ansteuerung des Fördersegments von einer Steuerung (11, 12) erzeugt werden;
wobei die abgeleiteten Daten (A) rechnerisch isoliert aus Rohdaten (R) eines einzelnen Fördersegmentes erzeugt werden.

3. Verfahren nach einem der vorherigen Ansprüche,
wobei die Fördersegmentdaten (R, A, 5S, V3, I3, C), die beim Betrieb von einer Vielzahl von Fördersegmenten (2a..e) anfallen, in einer Datensammlung (200) zusammengefasst werden;
insbesondere wobei die Fördersegmentdaten (R, A, 5S, V3, I3, C), die beim Betrieb eines Fördersegmentes anfallen, in einem Datensatz (20) zusammengefasst werden und/oder dass die Datensätze (20..e) einer Vielzahl von Fördersegmenten (2a..e) in der Datensammlung (200) zusammengefasst werden.

4. Verfahren nach einem der vorherigen Ansprüche,
**dadurch gekennzeichnet,**
**dass** eine übergeordnete Anlagensteuerung (12) vorgesehen ist, um die Mehrzahl der Fördersegmente (2) anzusteuern und/oder die Mehrzahl an Zonensteuerungen (11) anzusteuern.

5. Verfahren nach einem der vorherigen Ansprüche,
**dadurch gekennzeichnet,**
**dass** bei der Identifizierung von fördergutspezifischen Datenmustern fördersegmentindividuelle Daten berücksichtigt werden;
insbesondere
- wobei die fördersegmentindividuellen Daten statische Metadaten umfassen, die in einer Datenbasis hinterlegt sind;
und/oder
- wobei zur Kompensation von abweichender Hardware zwischen den Fördersegmenten ein fördersegmentspezifisches Datenmuster zur Kompensation der Abweichung berücksichtigt wird.

6. Verfahren nach einem der vorherigen Ansprüche,
**dadurch gekennzeichnet,**
**dass** auf Basis eines fördergutspezifischen Datenmusters (M1) ein fördergutindividueller Fördergutdatensatz (17S) in einer Fördergutdatenbank (17) angepasst wird,
insbesondere wobei ein fördergutindividueller Fördergutdatensatz (17S) Angaben zur Identität des Förderguts, zum Ziel des Förderguts und/oder von physikalischen Werten des Förderguts aufweist, und/oder
insbesondere wobei eine Anlagensteuerung (12) der Förderanordnung (1) Zugriff auf die fördergutindividuellen Fördergutdatensatz (17S) der Fördergutdatenbank (17) verfügt zum Zwecke zur Steuerung der Förderanordnung.

7. Verfahren nach einem der vorherigen Ansprüche,
**dadurch gekennzeichnet,**
**dass** die Datenmuster (M1, M2) anhand einer lokalen Auswerteeinheit (14) identifiziert werden,
insbesondere wobei die identifizierten Muster (M1, M2) über eine Datenfernverbindung (18) an eine externen, insbesondere zentrale, Auswerteeinheit (19) übermittelt werden.

8. Verfahren nach einem der vorherigen Ansprüche,
**dadurch gekennzeichnet,**
**dass** auf Basis eines identifizierten Musters (M1, M2) eine Handlungsanweisung (IH) bestimmt wird, und basierend auf der bestimmten Handlungsanweisung (EH, IH) ein Steuerbefehl (C) an einen Aktuator (3M) innerhalb der Förderanordnung (1) ausgegeben wird.

9. Verfahren nach einem der vorherigen Ansprüche,
**dadurch gekennzeichnet,**
**dass** ein Datenmuster identifiziert wird auf Basis von Fördersegmentdaten (R, A) aus einer Anzahl von ersten Fördersegmenten (2a..d; 2b..e);
und **dass** die bestimmte Handlungsanweisung (IH, EH) an ein zweites Fördersegment (2e; 2a) ausgegeben wird, welches nicht Bestandteil der Anzahl von ersten Fördersegmenten (2a..d; 2b..e) ist, auf deren Basis das Muster erkannt wurde;
insbesondere dass das zweite Fördersegment (2e) stromabwärts der Anzahl von ersten Fördersegmenten (2a..d) angeordnet ist oder dass das zweite Fördersegment (2a) stromaufwärts der Anzahl von ersten Fördersegmenten (2b..e) angeordnet ist.

10. Verfahren nach einem der zwei vorherigen Ansprüche,
**dadurch gekennzeichnet,**
**dass** ein Datenmuster identifiziert wird auf Basis von Fördersegmentdaten (R, A) einer ersten Förderanordnung (1a..d);
und **dass** die bestimmte Handlungsanweisung (IH, EH) an eine zweite Förderanordnung (1d) ausgegeben wird, die abweichend ist zu der ersten Förderanordnung.

11. Verfahren nach einem der drei vorherigen Ansprüche,
**dadurch gekennzeichnet,**
**dass** bei der Bestimmung einer Handlungsanweisung (EH, IH) auf einen Katalog (K) von vordefinierten Zuordnungen (Z) zugegriffen wird,
wobei der Katalog eine Mehrzahl an Zuordnungen (Z) zwischen identifizierten Datenmustern (M1, M2, ..) und Handlungsanweisungen (EH, IH) enthält.

12. Verfahren nach einem der vorherigen Ansprüche,
**dadurch gekennzeichnet,**
**dass** anhand eines identifizierten, insbesondere fördergutspezifischen, Datenmusters eine Wiedererkennung eines Förderguts in einem Fördersegment festgestellt wird, und
**dass** anhand eines Datenmusters gezielt eine Nichtidentität mit einem erwarteten Fördergut festgestellt wird.

13. Verfahren nach einem der vorherigen Ansprüche,
**dadurch gekennzeichnet,**
**dass** die identifizierten Datenmuster definiert einem Löschungsschritt unterzogen, wobei die Datenmuster in Abhängigkeit von deren Speicherhort (14, 19) und von deren Spezifizierung gelöscht werden;
insbesondere wobei fördergutspezifische Datenmuster aus einer lokalen Auswerteinheit (14) gelöscht werden, wenn das Fördergut, auf welches sich das Datenmuster bezieht, diejenige Förderanordnung, deren Bestandteil die Auswerteinheit ist, verlassen hat.

14. Verfahren nach einem der vorherigen Ansprüche,
**dadurch gekennzeichnet,**
**dass** die Fördersegmente der Förderanordnung definiert in einen Datenmustergenerierungsmodus überführt werden, in dem eine Wechselwirkung zwischen dem Fördersegment und einem darin angeordneten Fördergut stattfindet; wobei die Fördersegmente zeitlich koordiniert in den Datenmustergenerierungsmodus überführt werden, so dass die Wechselwirkung zwischen den unterschiedlichen Fördersegmenten und einem jeweils identischen Fördergut stattfindet,
insbesondere um gezielt Fördersegmentdaten zu erzeugen, anhand welchen ein fördersegmentspezifische Datenmuster für mehrere Fördersegmente zu erzeugen.

15. Verfahren nach einem der vorherigen Ansprüche,
**dadurch gekennzeichnet,**
**dass** Abbilder (2B) von mehreren Fördersegmenten (2) der Förderanordnung (1) graphisch auf einer Anzeigevorrichtung (16) dargestellt werden,
die räumliche Anordnung der Abbilder (2B) zueinander entspricht einer räumlichen Anordnung der durch die Abbilder (2B) dargestellten Fördersegmenten (2) zueinander,
insbesondere wobei das Abbild (2B) eine graphische Darstellung der Fördersegmente in Draufsicht umfasst.

## Claims

1. A method for operating a conveyor system (1), in particular comprising the control and/or monitoring of the conveyor system,
wherein the conveyor system (1) comprises a plurality of conveyor segments (2), wherein
each conveyor segment (2) is set up to convey a conveyed material (9) along a conveying direction (F);
wherein a conveyor segment (2) comprises several conveyor rolls (3),
wherein one of the conveyor rolls (3) is designed as a motor-driven conveyor roll (3M), wherein the conveyor rolls (3) of a conveyor segment (2) are drive connected with each other via one or several drive connectors (4), and jointly driven by the motor-driven conveyor roll (3M),
wherein the conveyor segments (2) are arranged one after the other in such a way that the conveyed material (9) is transferred from an upstream conveyor segment (2a..2d) to a downstream conveyor segment (2b..e),
wherein each conveyor segment (2) has a conveyor segment drive (3M), which is set up to provide a driving force, in particular isolated to this conveyor segment, so as to convey the conveyed material (9) on this conveyor segment;
wherein each conveyor segment (2) has a presence sensor (5), which is adapted detect the presence of the conveyed material (9) on the conveyor segment (2),
wherein each conveyor segment (2) has allocated to it a zone controller (11) for controlling the conveyor segment drive (3M);
wherein the conveyor system is operated in such a way that a maximum of one conveyed material is always conveyed in each conveyor segment during regular operation,
with the method comprising the following procedural steps:
acquiring conveyor segment data (R), specifically datasets of a respective conveyor segment, which are generated during operation of the conveyor segments (2), wherein the respective conveyor segment data comprise:
- the sensor value of the presence sensor (5),
- the speed of a roll in the conveyor segment (2),
- the amperage of the current with which the motor-driven conveyor roll (3M) of a conveyor segment is driven;
collecting the conveyor segment data (R) of the plurality of conveyor segments; and
identifying, in particular in a pattern identification step, data patterns (M) from the data collection (200);
specifying, in particular in a pattern identification step, the identified data patterns (M),
wherein a pattern specification from a plurality of pattern specifications is allocated to a data pattern,
wherein the plurality of pattern specifications comprise
- conveyed material-specific data patterns (M1) and
- conveyor segment-specific data patterns (M2),
wherein the specification process involves deciding whether a data pattern is either conveyor segment-specific or conveyed material-specific,
wherein the generated conveyor segment data (R) are used to detect anomalies in conveyed materials and conveyor segments,
wherein a conveyed material-specific data pattern (M1) is a data pattern that appears in the dataset of a conveyor segment due to the conveyance of a conveyed material (9),
wherein a conveyed material-specific data pattern is identified based on a continuity criterion during regular operation, which takes into account the fact that a conveyed material is always present initially on an upstream conveyor segment and subsequently on a downstream conveyor segment,
wherein an arrival of a conveyed material is determined as soon as a conveyed material-specific data pattern on a conveyor segment unexpectedly does not arise in the conveyor segment data generated there,
wherein a conveyor segment-specific data pattern (M2) comprises: values for the motor current of a conveyor segment given the sequential conveyance of several conveyed materials (9a, 9b, 9c),
wherein structural characteristics in a conveyor segment are detected when a conveyor segment-specific data pattern (M2) appears in a dataset of a conveyor segment, and does not appear in the datasets of the remaining conveyor segments.

2. The method according to the previous claim,
**characterized in that**
the conveyor segment data comprise raw data (R) as well as derived data (A);
wherein the raw data (R) comprise data that were acquired using a sensor (5) arranged in the conveyor segment (2) (13, S5) or generated as control data (C) for actuating the conveyor segment by a controller (11, 12);
wherein the derived data (A) are generated mathematically isolated from raw data (R) of an individual conveyor segment.

3. The method according to one of the preceding claims,
wherein the conveyor segment data (R, A, 5S, V3, 13, C) generated during the operation of a plurality of conveyor segments (2a..e) are combined into a data collection (200);
in particular wherein the conveyor segment data (R, A, 5S, V3, 13, C) generated during the operation of a conveyor segment are combined into a dataset (20) and/or that the datasets (20..e) of a plurality of conveyor segments (2a..e) are combined in the data collection (200).

4. The method according to one of the preceding claims,
**characterized in that**
a superordinate system controller (12) is provided, so as to actuate the plurality of conveyor segments (2) and/or actuate the plurality of zone controllers (11).

5. The method according to one of the preceding claims,
**characterized in that**
conveyor segment-individual data are considered during the identification of conveyed material-specific data patterns;
in particular
- wherein the conveyor segment-individual data comprise static metadata stored in a database;
and/or,
- in order to compensate for deviating hardware between the conveyor segments, a conveyor segment-specific data pattern to compensate for the deviation is considered.

6. The method according to one of the preceding claims,
**characterized in that**
a conveyed material-individual conveyed material dataset (17S) is adjusted in a conveyed material database (17) based on a conveyed material-specific data pattern (M1),
in particular wherein a conveyed material-individual conveyed material dataset (17S) has information about the identity of the conveyed material, the destination of the conveyed material and/or physical values of the conveyed material, and/or
in particular wherein a system controller (12) of the conveyor system (1) has access to the conveyed material-individual conveyed material dataset (17S) of the conveyed material database (17) for purposes of controlling the conveyor system.

7. The method according to one of the preceding claims,
**characterized in that**
the data patterns (M1, M2) are identified using a local evaluation unit (14), in particular wherein the identified patterns (M1, M2) are transmitted via a remote data connection (18) to an external, in particular central, evaluation unit (19).

8. The method according to one of the preceding claims,
**characterized in that**
a handling instruction (IH) is determined based on an identified pattern (M1, M2), and a control command (C) is output to an actuator (3M) inside of the conveyor system (1) based on the determined handling instruction (EH, IH).

9. The method according to one of the preceding claims,
**characterized in that**
a data pattern is identified based on conveyor segment data (R, A) from a number of first conveyor segments (2a..d; 2b..e);
and that the determined handling instruction (IH, EH) is output to a second conveyor segment (2e; 2a), which is not a component of the number of first conveyor segments (2a..d; 2b..e) based upon which the pattern was detected;
in particular that the second conveyor segment (2e) is arranged downstream from the number of first conveyor segments (2a..d) or that the second conveyor segment (2a) is arranged upstream from the number of first conveyor segments (2b..e).

10. The method according to one of the two preceding claims,
**characterized in that**
a data pattern is identified based on conveyor segment data (R, A) of a first conveyor system (1a..d);
and that the determined handling instruction (IH, EH) is output to a second conveyor system (1d), which deviates from the first conveyor system.

11. The method according to one of the three preceding claims,
**characterized in that**
a catalog (K) of predefined allocations (Z) is accessed while determining a handling instruction (EH, IH),
wherein the catalog contains a plurality of allocations (Z) between identified data patterns (M1, M2, ..) and handling instructions (EH, IH).

12. The method according to one of the preceding claims,
**characterized in that**
a recognition of a conveyed material in a conveyor segment is determined based on an identified, in particular conveyed material-specific, data pattern, and
a nonidentity with an expected conveyed material is specifically determined based on a data pattern.

13. The method according to one of the preceding claims,
**characterized in that**
the identified data patterns are subjected to a deletion step in a defined manner, wherein the data patterns are deleted as a function of their storage location (14, 19) and their specification;
in particular wherein conveyed material-specific data patterns from a local evaluation unit (14) are deleted if the conveyed material to which the data pattern refers has left the conveyor system of which the evaluation unit is part.

14. The method according to one of the preceding claims,
**characterized in that**
the conveyor segments of the conveyor system are switched into a data pattern generating mode in a defined manner, in which an interaction takes place between the conveyor segment and a conveyed material arranged therein;
wherein the conveyor segments are transferred into the data pattern generating mode in a time-coordinated manner, so that the interaction takes place between the different conveyor segments and a respectively identical conveyed material,
in particular in order to specifically generate conveyor segment data to be used in generating a conveyor segment-specific data pattern for several conveyor segments.

15. The method according to one of the preceding claims,
**characterized in that**
images (2B) of several conveyor segments (2) of the conveyor system (1) are graphically illustrated on a display device (16),
the spatial arrangement of images (2B) relative to each other corresponds to a spatial arrangement of the conveyor segments (2) depicted by the images (2B) relative to each other,
in particular wherein the image (2B) comprises a graphic illustration of the conveyor segments as viewed from above.

## Revendications

1. Procédé de fonctionnement d'un agencement de transport (1), comprenant en particulier la commande et/ou le contrôle de l'agencement de transport,
sachant que l'agencement de transport (1) comprend une pluralité de segments de transport (2), sachant que
chaque segment de transport (2) est agencé pour transporter un produit à transporter (9), le long d'une direction de transport (F) ;
sachant qu'un segment de transport (2) comprend plusieurs rouleaux de transport (3),
sachant qu'un des rouleaux de transport (3) est constitué sous la forme d'un rouleau de transport motorisé (3M), sachant que les rouleaux de transport (3) d'un segment de transport (2) sont reliés en entraînement entre eux par le biais d'un ou de plusieurs raccords d'entraînement (4) et sont entraînés ensemble par le rouleau de transport motorisé (3M),
sachant que les segments de transport (2) sont disposés les uns derrière les autres de telle sorte que le produit à transporter (9) est transmis d'un segment de transport en amont (2a..2d) à un segment de transport en aval (2b..e),
sachant que chaque segment de transport (2) comporte un entraînement de segment de transport (3M), qui est agencé pour fournir une force d'entraînement en particulier de façon isolée pour ce segment de transport pour transporter ainsi le produit à transporter (9) sur ce segment de transport ;
sachant que chaque segment de transport (2) comporte un capteur de présence (5), lequel est agencé pour reconnaître la présence du produit à transporter (9) sur le segment de transport (2),
sachant qu'une commande de zone (11) est affectée à chaque segment de transport (2) pour commander l'entraînement de segment de transport (3M) ;
sachant que l'agencement de transport est utilisé de telle sorte qu'un produit à transporter est toujours transporté au maximum dans chaque segment de transport en fonctionnement régulé,
le procédé comprenant les étapes de procédé suivantes :
saisie de données de segment de transport (R), notamment ensembles de données d'un segment de transport respectif, qui apparaissent lors du fonctionnement des segments de transport (2), sachant que les données de segment de transport comprennent respectivement :
- la valeur de détection du capteur de présence (5),
- la vitesse d'un rouleau dans le segment de transport (2),
- l'intensité de courant du courant avec laquelle le rouleau de transport motorisé (3M) d'un segment de transport est entraîné,
collecte des données de segment de transport (R) de la multitude de segments de transport
et
identification de modèles de données (M) à partir de la collecte de données (200), en particulier dans une phase d'identification de modèle ;
spécification, des modèles de données identifiés (M), en particulier dans une phase de spécification de modèle,
sachant qu'une spécification de modèle est attribuée à un modèle de données à partir d'une pluralité de spécifications de modèles,
sachant que la pluralité de spécifications de modèle comprend
- des modèles de données spécifiques au transport (M1) et
- des modèles de données spécifiques au segment de transport (M2),
sachant que lors de la spécification, il est décidé si un modèle de données est soit spécifique au segment de transport, soit spécifique au produit à transporter ,
sachant que les données de segment de transport (R) se présentant sont utilisées pour identifier des anomalies sur les biens transportés et les segments de transport,
sachant qu'un modèle de données spécifique au produit à transporter (M1) est un modèle de données, qui apparaît en raison du transport d'un produit à transporter (9) dans un ensemble de données d'un segment de transport,
sachant que l'identification d'un modèle de données spécifique au produit à transporter a lieu en raison d'un critère de continuité en fonctionnement régulé, laquelle tient compte du fait qu'un produit à transporter est présent toujours d'abord sur un segment de transport en amont et ensuite sur un segment de transport en aval,
sachant qu'une apparition d'un produit à transporter est déterminée dès qu'un modèle de données spécifique au produit à transporter sur un segment de transport ne réapparaît pas contre toute attente dans les données de segment de transport s'y présentant,
sachant qu'un modèle de données spécifique au segment de transport (M2) comprend : des valeurs pour le courant de moteur d'un segment de transport lors du transport successif de plusieurs biens transportés (9a, 9b, 9c),
sachant que des particularités structurales sont identifiées dans un segment de transport, lorsqu'un modèle de données spécifique au segment de transport (M2) apparaît dans un ensemble de données d'un segment de données et n'apparaît pas dans l'ensemble de données des segments de transport restants.

2. Procédé selon la revendication précédente,
**caractérisé en ce que**
les données de segment de transport comprennent des données brutes (R) ainsi que des données dérivées (A) ;
sachant que les données brutes (R) comprennent les données, qui sont saisies (I3, S5) à l'aide d'un capteur (5) disposé dans le segment de transport (2) ou sont générées en tant que données de commande (C) par une commande (11, 12) pour la commande du segment de transport ;
sachant que les données dérivées (A) sont générées par le calcul de façon isolée à partir des données brutes (R) d'un segment de transport individuel.

3. Procédé selon l'une quelconque des revendications précédentes,
sachant que les données de segment de transport (R, A, 5S, V3, 13, C), qui se présentent lors de l'utilisation d'une pluralité de segments de transport (2a..e), sont regroupées dans un regroupement de données (200) ;
en particulier, sachant que les données de segment de transport (R, A, 5S, V3, 13, C), qui se présentent lors de l'utilisation d'un segment de transport, sont regroupées dans un ensemble de données (20) et/ou en ce que les ensembles de données (20..e) d'une pluralité de segments de transport (2a..e) sont regroupés dans le regroupement de données (200).

4. Procédé selon l'une quelconque des revendications précédentes,
**caractérisé en ce qu'**
une commande d'installation subordonnée (12) est prévue pour activer la pluralité des segments de transport (2) et/ou activer la pluralité de commandes de zone (11).

5. Procédé selon l'une quelconque des revendications précédentes,
**caractérisé en ce que**
lors de l'identification de modèles de données spécifiques au produit à transporter, on prend en considération des données individuelles du segment de transport ;
en particulier
- sachant que les données individuelles du segment de transport comprennent des métadonnées statiques, qui sont mémorisées dans une base de données ;
et/ou
- sachant que pour la compensation du matériel divergent entre les segments de transport, un modèle de données spécifique au segment de transport est pris en considération pour la compensation de l'écart.

6. Procédé selon l'une quelconque des revendications précédentes,
**caractérisé en ce qu'**
un ensemble de données de produit à transporter individuel du produit à transporter (17S) est adapté sur la base d'un modèle de données spécifique au bien transporte (M1) dans une banque de données de produit à transporter (17),
en particulier, sachant qu'un ensemble de données de produit à transporter individuel du produit à transporter (17S) comporte des indications relatives à l'identité du produit à transporter dans le but du produit à transporter et/ou des valeurs du produit à transporter, et/ou
en particulier, sachant qu'une commande d'installation (12) de l'agencement de transport (1) dispose d'un accès à l'ensemble de données de produit à transporter individuel du produit à transporter (17S) de la banque de données de produit à transporter (17) dans le but de commander l'agencement de transport.

7. Procédé selon l'une quelconque des revendications précédentes,
**caractérisé en ce que**
les modèles de données (M1, M2) sont identifiés à l'aide d'une unité d'évaluation locale (14),
en particulier, sachant que les modèles identifiés (M1, M2) sont transmis à une unité d'évaluation (19) externe, en particulier centrale, par le biais d'une liaison à distance de données (18).

8. Procédé selon l'une quelconque des revendications précédentes,
**caractérisé en ce qu'**
une instruction de manutention (IH) est déterminée sur la base d'un modèle identifié (M1, M2) et en se basant sur l'instruction de manutention déterminée (EH, IH), un ordre de commande (C) est délivré à un actionneur (3M) à l'intérieur de l'agencement de transport (1).

9. Procédé selon l'une quelconque des revendications précédentes,
**caractérisé en ce qu'**
un modèle de données est identifié sur la base de données de segment de transport (R, A) à partir d'un nombre de premiers segments de transport (2a..d ; 2b..e) ;
et **en ce que** l'instruction de manutention déterminée (IH, EH) est délivrée à un deuxième segment de transport (2e^{;} 2a), lequel n'est pas un composant du nombre des premiers segments de transport (2a..d ; 2b..e) sur la base desquels le modèle a été identifié ;
en particulier, **en ce que** le deuxième segment de transport (2e) est disposé en aval du nombre de premiers segments de transport (2a..d) ou **en ce que** le deuxième segment de transport (2a) est disposé en amont du nombre de premiers segments de transport (2b..e).

10. Procédé selon l'une quelconque des revendications précédentes,
**caractérisé en ce qu'**
un modèle de données est identifié sur la base de données de segment de transport (R, A) d'un premier agencement de transport (1a..d) ;
et **en ce que** l'instruction de manutention déterminée (IH, EH) est délivrée à un deuxième agencement de transport (1d), qui est divergent par rapport au premier agencement de transport.

11. Procédé selon l'une quelconque des revendications précédentes,
**caractérisé en ce que**
lors de la détermination d'une instruction de manutention (EH, IH), on accède à un catalogue (K) d'attributions prédéfinies (Z),
sachant que le catalogue contient une pluralité d'attributions (Z) entre des modèles de données (M1, M2, ..) identifiés et des instructions de manutention (EH, IH).

12. Procédé selon l'une quelconque des revendications précédentes,
**caractérisé en ce qu'**
à l'aide d'un modèle de données identifié, en particulier spécifique au produit à transporter, on constate une reconnaissance d'un produit à transporter dans un segment de transport, et
en qu'à l'aide d'un modèle de données, on constate de façon précise une non-identité avec un produit à transporter à attendu.

13. Procédé selon l'une quelconque des revendications précédentes,
**caractérisé en ce que**
les modèles de données identifiés sont soumis de façon définie à une phase d'effacement, sachant que les modèles de données sont effacés en fonction de leur lieu de mémorisation (14, 19) et de leur spécification ;
en particulier, sachant que les modèles de données spécifiques au produit à transporter sont effacés à partir d'une unité d'évaluation locale (14), lorsque le produit à transporter auquel se réfère le modèles de données, a quitté l'agencement de transport dont le composant est l'unité d'évaluation.

14. Procédé selon l'une quelconque des revendications précédentes,
**caractérisé en ce que**
les segments de transport de l'agencement de transport sont transférés de façon définie dans un mode de génération de modèles de données, un effet réciproque ayant lieu entre le segment de transport et un produit à transporter disposé dans celui-ci ;
sachant que les segments de transport sont transférés de façon coordonnée dans le temps dans le mode de génération de modèles de données de telle manière que l'effet réciproque ait lieu entre les différents segments de transport et un produit à transporter respectivement identique,
en particulier pour générer de façon précise des données de segment de transport, pour générer à l'aide celles-ci un modèle de données spécifique au segment de transport pour plusieurs segments de transport.

15. Procédé selon l'une quelconque des revendications précédentes,
**caractérisé en ce que**
les reproductions (2B) de plusieurs segments de transport (2) de l'agencement de transport (1) sont représentées graphiquement sur un dispositif d'affichage (16),
l'agencement dans l'espace des reproductions (2B) correspond entre elles à un agencement dans l'espace des segments de transport (2) représentés par les reproductions (2B) les uns par rapport aux autres,
en particulier, sachant que la reproduction (2B) comprend une représentation graphique des segments de transport en vue de dessus.
